# EUROPEAN PATENT APPLICATION

(11) **EP 4 668 855 A1**
(43) Date of publication of application: **24.12.2025**
(21) Application number: 23921896.9
(22) Date of filing: 16.02.2023
(51) Int. Cl.: H04W 36/00

(54) **APPLICABLE CELL DETERMINATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2023/076597
(87) International publication number: WO 2024/168742

(57) **Abstract**

The present application relates to the field of communications. Disclosed are an applicable cell determination method and apparatus, and a device and a storage medium. The method comprises: receiving configuration information, wherein the configuration information is used for mobility management, which is triggered on the basis of a condition; and determining an applicable cell corresponding to an execution condition of the mobility management. After receiving configuration information used for mobility management, which is triggered on the basis of a condition, a terminal device determines an applicable cell corresponding to an execution condition of the mobility management, and the assessment of the execution condition of the mobility management on the basis of a correct applicable cell is supported, thereby realizing the correct assessment of the execution condition.

## Description

### FIELD

The present disclosure relates to the field of communication technologies, and particularly to a method for determining an applicable cell, an apparatus, a device and a storage medium.

### BACKGROUND

In the related art, when determining an applicable cell corresponding to an execution condition of mobility management, the applicable cell is usually determined based on whether conditional reconfiguration configuration information includes configuration for a candidate Master Cell Group (MCG) or a candidate Secondary Cell Group (SCG). If it includes the configuration for the candidate MCG, the applicable cell is the candidate Primary Cell (PCell) corresponding to the candidate MCG.

However, for configuration information that can be jointly configured for mobility management of both the MCG and the SCG, since the configuration for the candidate MCG is always present, the applicable cell corresponding to the execution condition would always be the candidate PCell corresponding to the candidate MCG. For mobility management intended for SCG, this method of determining the applicable cell would result in the inability to evaluate the execution condition or lead to erroneous evaluation of the execution condition.

Therefore, how to ensure the correct determination of the applicable cell corresponding to the execution condition is an urgent problem to be solved.

### SUMMARY

Embodiments of the present application provide a method, apparatus, device, and storage medium for determining an applicable cell. The technical solutions are as follows:

According to one aspect of the present application, a method for determining an applicable cell is provided. The method is performed by a terminal device and includes:
receiving configuration information, where the configuration information is used for a condition-triggered mobility management; and
determining an applicable cell corresponding to an execution condition of the condition-triggered mobility management.

According to another aspect of the present application, a method for determining an applicable cell is provided. The method is performed by a network device and includes:
sending configuration information, where the configuration information is used for a condition-triggered mobility management, and the configuration information is used for a terminal device to determine an applicable cell corresponding to an execution condition of the condition-triggered mobility management.

According to another aspect of the present application, an apparatus for determining an applicable cell is provided. The apparatus includes:
a first receiving module, configured to receive configuration information, where the configuration information is used for a condition-triggered mobility management; and
a first determination module, configured to determine an applicable cell corresponding to an execution condition of the condition-triggered mobility management.

According to another aspect of the present application, an apparatus for determining an applicable cell is provided. The apparatus includes:
a second sending module, configured to send configuration information, where the configuration information is used for a condition-triggered mobility management, and the configuration information is used for a terminal device to determine an applicable cell corresponding to an execution condition of the condition-triggered mobility management.

According to another aspect of the present application, a communication device is provided. The communication device includes: a processor; a transceiver connected to the processor; a memory configured to store executable instructions of the processor; where the processor is configured to load and execute the executable instructions to cause the communication device to implement the method for determining an applicable cell as described in any of the above aspects.

According to another aspect of the present application, a computer-readable storage medium is provided. The computer-readable storage medium has stored therein executable instructions that, when loaded and executed by a processor, cause the computer-readable storage medium to implement the method for determining an applicable cell as described in any of the above aspects.

The technical solutions provided by the embodiments of the present application at least include the following beneficial effects:
The terminal device is supported to determine the applicable cell corresponding to the execution condition of the condition-triggered mobility management after receiving the configuration information used for the condition-triggered mobility management, thereby supporting the evaluation of the execution condition of the mobility management based on the correct applicable cell, thus achieving correct evaluation of the execution condition.

### BRIEF DESCRIPTION OF THE DRAWINGS

To describe the technical solutions in the embodiments of the present application more clearly, the following briefly introduces the drawings required for describing the embodiments. Apparently, the drawings in the following description show merely some embodiments of the present application, and a person of ordinary skill in the art may still derive other drawings from these drawings without creative efforts.
FIG. 1 is a schematic diagram of a communication scenario in the related art;
FIG. 2 is a schematic diagram of a communication scenario in the related art;
FIG. 3 is a schematic diagram of a service cell deployment mode in the related art;
FIG. 4 is a schematic diagram of a communication system according to some illustrative embodiments of the present application;
FIG. 5 is a flowchart of a method for determining an applicable cell according to some illustrative embodiments of the present application;
FIG. 6 is a flowchart of a method for determining an applicable cell according to some illustrative embodiments of the present application;
FIG. 7 is a flowchart of a method for determining an applicable cell according to some illustrative embodiments of the present application;
FIG. 8 is a flowchart of a method for determining an applicable cell according to some illustrative embodiments of the present application;
FIG. 9 is a flowchart of a method for determining an applicable cell according to some illustrative embodiments of the present application;
FIG. 10 is a flowchart of a method for determining an applicable cell according to some illustrative embodiments of the present application;
FIG. 11 is a flowchart of a method for determining an applicable cell according to some illustrative embodiments of the present application;
FIG. 12 is a flowchart of a method for determining an applicable cell according to some illustrative embodiments of the present application;
FIG. 13 is a structural block diagram of an apparatus for determining an applicable cell according to some illustrative embodiments of the present application;
FIG. 14 is a structural block diagram of an apparatus for determining an applicable cell according to some illustrative embodiments of the present application; and
FIG. 15 is a schematic structural diagram of a communication device according to some illustrative embodiments of the present application.

### DETAILED DESCRIPTION

To make the objectives, technical solutions, and advantages of the present application clearer, the following further describes the implementations of the present application in detail with reference to the drawings. Exemplary embodiments will be described in detail here, examples of which are illustrated in the drawings. When the following description refers to the drawings, unless otherwise indicated, the same numerals in different drawings represent the same or similar elements. The embodiments described in the following exemplary embodiments do not represent all embodiments consistent with the present application. On the contrary, they are merely examples of apparatuses and methods consistent with some aspects of the present application as detailed in the appended claims.

The terms used in the present disclosure are for the purpose of describing particular embodiments only and are not intended to limit the present disclosure. The singular forms "a", "the", and "said" used in the present disclosure and the appended claims are also intended to include plural forms, unless the context clearly indicates otherwise. It should also be understood that the term "and/or" as used herein refers to and includes any or all possible combinations of one or more of the associated listed items.

It should be understood that although the terms first, second, third, etc. may be used in the present disclosure to describe various information, this information should not be limited by these terms. These terms are only used to distinguish information of the same type from each other. For example, without departing from the scope of the present disclosure, first information may also be referred to as second information, and similarly, second information may also be referred to as first information. Depending on the context, the word "if" as used herein may be interpreted as "when" or "upon" or "in response to determining".

First, the related art involved in the embodiments of the present application is introduced:
Multi-Radio Dual Connectivity (MR-DC) Technology:
MR-DC is a generalized Intra Evolved Universal Terrestrial Radio Access (Intra-E-UTRA) dual connectivity, where a User Equipment (UE) can utilize radio resources provided by two different schedulers located on two different Next Generation Radio Access Network (NG-RAN) nodes, connected via a non-ideal backhaul. One scheduler provides New Radio (NR) access, and the other scheduler provides E-UTRA or NR access. One scheduler serves as a Master Node (MN), and the other serves as a Secondary Node (SN). The MN and SN are connected via a network interface, where at least the MN is connected to a Core Network (CN).

MR-DC with Evolved Packet Core (EPC):
E-UTRAN supports MR-DC via E-UTRA-NR DC (or EN-DC), where the UE is connected to an eNB acting as the MN and an en-gNB acting as the SN. The eNB is connected to the EPC via an S1 interface and to the en-gNB via an X2 interface. The en-gNB is connected to the EPC via an S1-U interface and to other en-gNBs via an X2-U interface.

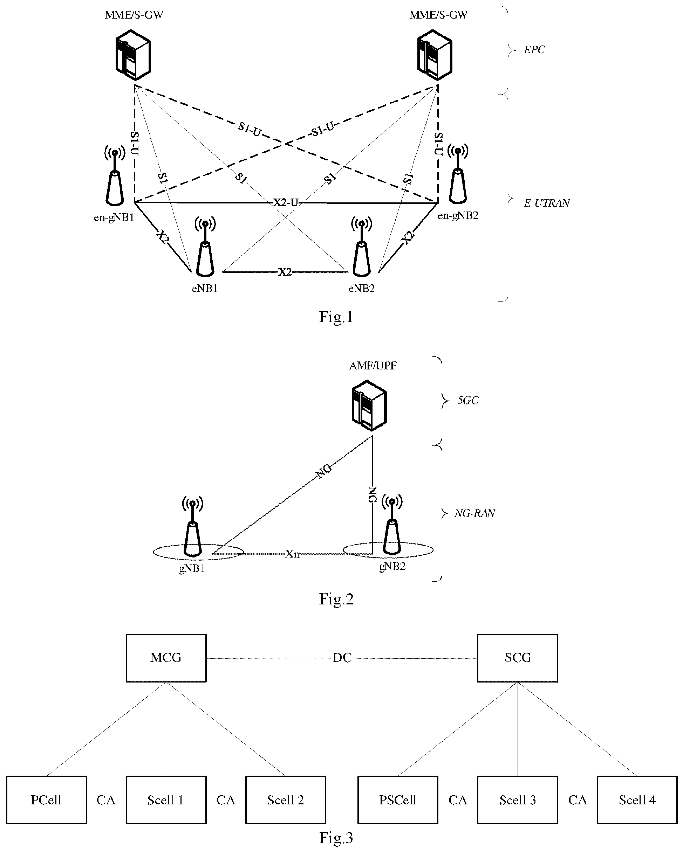

For example, the EN-DC architecture is as shown in FIG. 1. en-gNB1 is connected to a Mobility Management Entity (MME) or Serving Gateway (S-GW) via an S1-U interface; en-gNB2 is connected to the MME/S-GW via an S1-U interface; en-gNB1 is connected to en-gNB2 via an X2-U interface; eNB1 is connected to the MME/S-GW via an S1 interface; eNB2 is connected to the MME/S-GW via an S1 interface; eNB1 is connected to eNB2 via an X2 interface. The MME/S-GW belongs to the EPC, and en-gNB 1, en-gNB2, eNB1, and eNB2 belong to the E-UTRAN.

MR-DC with 5th Generation Core (5GC):

### A: E-UTRA-NR Dual Connectivity (E-UTRA-NR DC, or NGEN-DC)

NG-RAN supports NGEN-DC. The UE is connected to an ng-eNB acting as the MN and a gNB acting as the SN. The ng-eNB is connected to the 5GC, and the gNB is connected to the ng-eNB via an Xn interface.

### B: NR-E-UTRA Dual Connectivity (NR-E-UTRA DC, also called NE-DC)

NG-RAN supports NE-DC, where the UE is connected to a gNB acting as the MN and an ng-eNB acting as the SN. The gNB is connected to the 5GC, and the ng-eNB is connected to the gNB via an Xn interface.

### C: NR-NR Dual Connectivity (NR DC)

NG-RAN supports NR-NR DC, where the UE is connected to one gNB acting as the MN and another gNB acting as the SN. The gNB acting as the MN (also called the Master gNB) is connected to the 5GC via an NG interface, the two gNBs are connected to each other via an Xn interface, and the gNB acting as the SN (also called the Secondary gNB) may also be connected to the 5GC via an NG-U interface. Furthermore, in NR-DC, the UE may also access a single gNB, which simultaneously acts as both the MN and the SN, and this gNB configures both a Master Cell Group (MCG) and a Secondary Cell Group (SCG).

For example, the NR-DC architecture is as shown in FIG. 2. gNB1 acting as the MN is connected via an Xn interface to gNB2 acting as the SN. gNB1 is connected to an Access and Mobility Management Function (AMF) or User Plane Function (UPF) via an NG-U interface, and gNB2 is connected to the AMF or UPF via an NG-U interface. The AMF or UPF belongs to the 5GC, and gNB1 and gNB2 belong to the NG-RAN.

Under dual connectivity, the UE can access two cell groups: the MCG and the SCG. Within the MCG, there may be many cells, one of which is used for initial access. This cell is called the Primary Cell (PCell). As the name implies, the PCell is the "primary" cell within the MCG. Cells in the MCG other than the PCell are Secondary Cells (SCells). The SCG includes a Primary Secondary Cell (PSCell). Cells in the SCG other than the PSCell are SCells. Multiple cells within the same cell group can be deployed via Carrier Aggregation (CA). Since many signaling messages are only sent on the PCell and PSCell, for convenience of description, the PCell and PSCell can be collectively referred to as special cells (sPCell).

For example, as shown in FIG. 3, under dual connectivity, the UE can access two cell groups: the MCG and the SCG. The MCG includes the PCell, SCell1, and SCell2. The SCG includes the PSCell, SCell3, and SCell4. Within the MCG, the PCell, SCell1, and SCell2 are deployed via CA. Within the SCG, the PSCell, SCell3, and SCell4 are deployed via CA.

### Conditional Reconfiguration:

The Information Element (IE) ConditionalReconfiguration is used to configure, modify, or release the configuration information for conditional reconfiguration.

ConditionalReconfiguration includes condReconfigToAddModList, condReconfigToRemoveList, and attemptCondReconfig.
where CondReconfigToAddMod corresponds to a conditional reconfiguration configuration information.

CondReconfigToAddModList includes a list of conditional reconfigurations to be added or modified, each entry having a condReconfigId and associated condExecutionCond/condExecutionCondSCG and condRRCReconfig.

CondReconfigToAddModList includes one or more CondReconfigToAddMod, where each CondReconfigToAddMod includes condReconfigId, condExecutionCond, condRRCReconfig. Where condRRCReconfig includes CondReconfigExecCondSCG.

### Selective Activation of Cell Groups:

In the related art, Selective Activation of Cell Groups allows subsequent configurations to still be executed after a cell group (Cell Group, CG) change, without the need for the network to reconfigure or reinitialize the corresponding cell group selective activation configuration information, thereby reducing signaling overhead and the interruption duration during cell group change.

The cell group selective activation configuration information may include at least one of: a configuration ID, an activation condition (optional), and configuration of cells and/or cell groups to be activated.

The selective activation of cell groups can enable subsequent configurations to still be executed after a cell group change, without the network needing to reconfigure or reinitialize the corresponding cell group selective activation configuration. Therefore, in selective activation of cell groups, the network device can provide the terminal with "cell groups to be activated", and the "cell groups to be activated" can be activated or deactivated later without re-providing the cell group configuration.

In selective activation of cell groups, the network device can provide the terminal device with pre-configured candidate target cell groups or target cells. Subsequently, the terminal device can activate or deactivate the pre-configured candidate cells and/or cell groups based on configuration sent by the network device (e.g., an activation message) or corresponding activation events, without needing to re-provide the cell group configuration. Alternatively, in selective activation of cell groups, after activating a new cell or cell group, or applying a new cell configuration or cell group configuration, or accessing a new cell or cell group, the UE does not delete the corresponding cell group selective activation configuration information.

Selective activation of cell groups may also be called cell group activation. Cell group activation can enable the corresponding configuration information to still be executed after a change of cells and/or cell groups, without the network needing to reconfigure or reinitialize the corresponding cell group activation configuration information. Therefore, selective activation of cell groups can reduce signaling overhead and the interruption duration during cell group change. The configuration information for cell group activation may include: a configuration ID and configuration of target cells or target cell groups. Optionally, the cell group activation configuration information may further include a trigger condition (also called an execution condition or activation condition).

In the related art, selective activation of cell groups is a mobility management process, including any process where the UE activates or deactivates the corresponding cell or cell group, or applies the corresponding cell configuration or cell group configuration, or accesses the cell or cell group, based on cell group activation configuration, signaling sent by the network side, criteria specified in protocols, or UE autonomy, etc.

In the related art, selective activation of cell groups is a mobility management process, including any mobility management process where, after performing the mobility process, the UE does not delete or release the corresponding part or all of the configuration information. Not deleting or releasing the corresponding part or all of the configuration information may also be called retaining the corresponding part or all of the configuration information.

Layer 1 or Layer 2-Triggered Mobility (L1/L2-Triggered Mobility, LTM):
In the related art, the network side can provide the terminal with multiple "candidate cells (candidate cell groups)". In some embodiments, the network side can subsequently control the terminal device to switch among multiple "candidate cells (candidate cell groups)" via L1 signaling (e.g., Downlink Control Information (DCI)) or L2 signaling (e.g., Media Access Control Control Element (MAC CE)). For example, changing the working cell (cell group) from "candidate cell (candidate cell group)-1" to "candidate cell (candidate cell group)-2". Here, one serving cell (serving cell group) may correspond to one or more "candidate cells (candidate cell groups)".

Conditional Handover (CHO):
CHO refers to a handover executed by the UE when one or more handover execution conditions are met. The UE starts evaluating the execution conditions upon receiving the CHO configuration and stops evaluating the execution conditions after executing the handover (including Legacy Handover or CHO). CHO applies the following criteria:
1. CHO configuration includes CHO candidate cell configuration and execution conditions;
2. One execution condition may contain one or two trigger conditions (conditional event A3 or conditional event A5);
   - conditional event A3: Conditional reconfiguration candidate becomes amount of offset better than PCell/PSCell;
   - conditional event A5: PCell/PSCell becomes worse than absolute threshold1 AND conditional reconfiguration candidate becomes better than another absolute threshold2;
3. Before any CHO execution condition is met, if the UE receives a Handover (HO) command (without CHO configuration), it executes the legacy HO process, regardless of any previously received CHO configuration;
4. When executing CHO, that is, from when the UE starts synchronizing with the target cell, the UE no longer monitors the source cell.

Conditional PSCell Addition (CPA):
CPA is defined as PSCell addition executed by the UE when execution condition(s) is met. The UE starts evaluating the execution condition(s) upon receiving the CPA configuration and stops evaluating the execution condition(s) once PSCell addition or PCell change is triggered.

The trigger condition for CPA can be conditional event A4.
conditional event A4: Conditional reconfiguration candidate becomes better than absolute threshold.

Conditional PSCell Change (CPC):
CPC is defined as a PSCell change executed by the UE when execution condition(s) is met. The UE starts evaluating the execution condition(s) upon receiving the CPC configuration and stops evaluating the execution condition(s) once PSCell change or PCell change is triggered. Both intra-SN CPC without MN involvement and inter-SN CPC initiated either by the MN or SN are supported.

The trigger condition for MN-initiated CPC can be conditional event A4.
conditional event A4: Conditional reconfiguration candidate becomes better than absolute threshold.

The trigger condition for SN-initiated CPC can be conditional event A3 or conditional event A5.
- conditional event A3: Conditional reconfiguration candidate becomes amount of offset better than PCell/PSCell;
- conditional event A5: PCell/PSCell becomes worse than absolute threshold1 AND conditional reconfiguration candidate becomes better than another absolute threshold2.

Joint Configuration of CHO and Conditional PSCell Addition/Change (CPAC):
In the related art, condition-triggered mobility management has been introduced. The UE implements condition-triggered mobility management based on conditions configured by the network and associated candidate cells. After the conditions are met, the UE triggers mobility management and accesses its associated candidate cell. The conditions configured by the network can be specific measurement-based events, or location-based, time-based events. The associated candidate cells can be candidate PCells and PSCells, corresponding to the respective condition-triggered mobility management CHO and CPC/CPA. Currently, the related art supports MN-initiated CHO, MN-initiated CPA/CPC, and SN-initiated CPC.

However, the related art currently does not support simultaneous configuration of CHO and CPA/CPC. To improve robustness and reduce the impact on UE throughput, a solution combining CHO and CPC/CPA has been proposed in the related art, deciding to include the target MCG and candidate SCG for CPC/CPA in the CHO configuration. A UE with joint configuration of CHO and CPA/CPC can simultaneously execute CHO and its corresponding CPA/CPC.

In the discussions of the related art, there are mainly three specific configuration methods for the joint configuration of CHO and CPAC:
Configuration method 1: Nested configuration. The configuration of CHO and its associated one or more CPACs is contained within one conditional reconfiguration configuration information. The configuration information for the one or more CPACs is included within the CHO configuration information.

The CHO configuration information includes: configuration Identity (ID), CHO execution condition, first candidate target configuration (first RRCReconfiguration message). The first candidate target configuration includes configuration information for one or more CPACs.

Configuration method 2: Simultaneously include the execution conditions for CHO and CPAC and the configuration for the candidate MCG and candidate SCG in one conditional reconfiguration configuration information.

Configuration method 3: CHO and CPAC are configured through two separate conditional reconfiguration configuration information, and then associated via association information.

In the above three configuration methods, the execution conditions for CHO and CPAC can all be represented by one or more measurement identifiers. One measurement identifier can associate one trigger event.

In the related art, the UE determines the applicable cell (Applicable Cell) for evaluating the execution condition based on whether the candidate configuration information contains configuration for MCG or the SCG. The UE checks if condRRCReconfig includes masterCellGroup; if it does, the applicable cell is the candidate PCell corresponding to the candidate MCG; otherwise, if it includes secondaryCellGroup, the applicable cell is the candidate PSCell corresponding to the candidate SCG.

For configuration method 2 of the joint configuration of CHO and CPAC, its conditional reconfiguration configuration information includes a configuration identifier, execution conditions (including CHO and CPAC execution conditions), and candidate configuration (configuration for the target MCG and target SCG). If the method for determining the applicable cell according to the related art is applied, since the candidate configuration always includes the configuration for MCG, the candidate cell corresponding to the execution condition would always be the candidate PCell corresponding to the candidate MCG. However, the trigger condition for CPAC in the execution conditions does not correspond to the candidate PCell but should correspond to the candidate PSCell.

Therefore, if the method for determining the applicable cell in the related art continues to be applied to configuration method 2 of the joint configuration of CHO and CPAC, it will result in the inability to evaluate the execution condition or erroneous evaluation of the execution condition.

Based on the above problems, the present application provides a method for determining an applicable cell, supporting the terminal device to determine the correct applicable cell for evaluating the execution condition, thereby achieving correct evaluation of the execution condition.

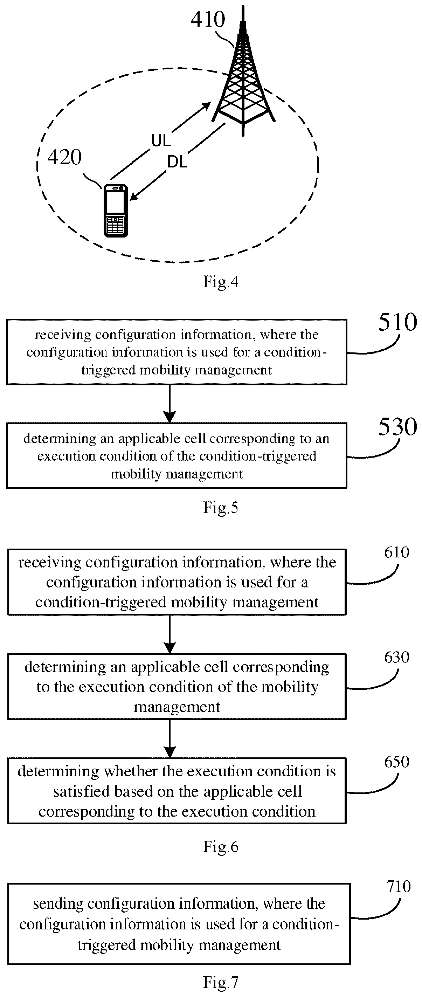

FIG. 4 shows a schematic diagram of a communication system provided by some exemplary embodiments of the present application. The communication system includes a network device 410 and a terminal device 420.

The network device 410 in the present application is a device with wireless transceiver functions. The network device 410 includes, but is not limited to: an Evolved Node B (eNB), a Radio Network Controller (RNC), a Node B (NB), a Base Station Controller (BSC), a Base Transceiver Station (BTS), a home base station (e.g., Home Evolved Node B, or Home Node B, HNB), a Baseband Unit (BBU), an Access Point (AP) in a Wireless Fidelity (Wi-Fi) system, a wireless relay node, a wireless backhaul node, a Transmission Point (TP), or a Transmission and Reception Point (TRP), etc. It may also be a Next Generation Node B (gNB) or Transmission Point (TRP or TP) in a fifth-generation (5th Generation, 5G) mobile communication system, or one or a group (including multiple antenna panels) of antenna panels of a base station in a 5G system, or may also be a network node constituting a gNB or transmission point, such as a Baseband Unit (BBU) or Distributed Unit (DU), etc., or a base station in a sixth-generation (6th Generation, 6G) mobile communication system, or a Core Network (CN), Fronthaul, Backhaul, Radio Access Network (RAN), network slice, etc. The network device may be a device including one or more of a Centralized Unit (CU) node, a DU node, and an Active Antenna Unit (AAU) node. Furthermore, the CU may be classified as a network device in the RAN, or it may be classified as a network device in the CN, which is not limited in the present application.

The terminal device 420 in the present application is a device with wireless transceiver functions, or called User Equipment (UE), access terminal, user unit, user station, mobile station, mobile terminal, remote station, remote terminal, mobile device, user terminal, terminal, wireless communication device, user agent, user device. The terminal includes, but is not limited to: handheld devices, wearable devices, vehicle-mounted devices, and Internet of Things (IoT) devices, etc., such as: mobile phones, tablet computers, e-book readers, laptop portable computers, desktop computers, televisions, game consoles, Mobile Internet Devices (MIDs), Augmented Reality (AR) terminals, Virtual Reality (VR) terminals, Mixed Reality (MR) terminals, wearable devices, handles, electronic tags, controllers, wireless terminals in Industrial Control, wireless terminals in Self Driving, wireless terminals in Remote Medical, wireless terminals in Smart Grid, wireless terminals in Transportation Safety, wireless terminals in Smart City, wireless terminals in Smart Home, wireless terminals in Remote Medical Surgery, cellular phones, cordless phones, Session Initiation Protocol (SIP) phones, Wireless Local Loop (WLL) stations, Personal Digital Assistants (PDAs), Set Top Boxes (STBs), Customer Premise Equipment (CPE), etc.

The terminal device 420 is within the coverage of the network device 410. The network device 410 and the terminal device 420 communicate with each other via some air interface technology, such as the Uu interface.

For example, there are two communication scenarios between the network device 410 and the terminal device 420: an uplink communication scenario and a downlink communication scenario. Uplink communication refers to sending signals to the network device 410; downlink communication refers to sending signals to the terminal device 420.

The technical solutions provided by the embodiments of the present application can be applied to various communication systems, for example: Global System of Mobile communication (GSM) system, Orthogonal Frequency Division Multiplexing (OFDM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long Term Evolution (LTE-A) system, Universal Mobile Telecommunication System (UMTS), Worldwide Interoperability for Microwave Access (WiMAX) communication system, 5G mobile communication system, New Radio (NR) system, evolved system of the NR system, LTE-based access to unlicensed spectrum (LTE-U) system, NR-based access to unlicensed spectrum (NR-U) system, Terrestrial Networks (TN) system, Non-Terrestrial Networks (NTN) system, Wireless Local Area Networks (WLAN), Wireless Fidelity (Wi-Fi), cellular IoT system, cellular passive IoT system, and may also be applicable to subsequent evolved systems of the 5G NR system, and may also be applicable to 6G and subsequent evolved systems. In some embodiments of the present application, "NR" may also be called 5G NR system or 5G system. The 5G mobile communication system may include Non-Standalone (NSA) and/or Standalone (SA). Furthermore, the terminal device 420 may also include smart printers, train detectors, gas station sensors, etc., whose main functions include at least one of collecting data, receiving control information and downlink data from the network device 410, and transmitting uplink data to the network device 410.

The technical solutions provided by the embodiments of the present application may also be applied to Machine Type Communication (MTC), Long Term Evolution-Machine (LTE-M), Device to Device (D2D) network, Machine to Machine (M2M) network, Internet of Things (IoT) network, or other networks. The IoT network may, for example, include a vehicle network. The communication method in the vehicle network system is collectively called Vehicle to X (V2X, X can represent anything), for example, V2X may include: Vehicle to Vehicle (V2V) communication, Vehicle to Infrastructure (V2I) communication, communication between vehicles and pedestrians (Vehicle to Pedestrian, V2P), or Vehicle to Network (V2N) communication, etc.

The network device 410 and the terminal device 420 may each be configured with multiple antennas. The multiple antennas may include at least one transmitting antenna for transmitting signals and at least one receiving antenna for receiving signals. Additionally, each communication device further includes a transmitter chain and a receiver chain. Those of ordinary skill in the art may understand that they may all include multiple components related to signal transmission and reception (e.g., processor, modulator, multiplexer, demodulator, demultiplexer, or antenna, etc.). Therefore, the network device 410 and the terminal device 420 can communicate via multi-antenna technology.

The network device 410 in the present application may be one network device, or multiple network devices, for example, the network device 410 is a general term for the MN and SN.

The communication system provided in the present application may be applied to, but not limited to, at least one of the following communication scenarios: uplink communication scenario, downlink communication scenario, sidelink communication scenario.

FIG. 5 shows a flowchart of a method for determining an applicable cell provided by some exemplary embodiments of the present application. The method is performed by the terminal device shown in FIG. 4. The method includes at least some of the following steps:
Step 510: receiving configuration information, where the configuration information is used for a condition-triggered mobility management.

The condition-triggered mobility management includes condition-triggered mobility management for MCG, and/or condition-triggered mobility management for SCG.

In some embodiments, the condition-triggered mobility management for MCG includes condition-triggered mobility management for the PCell; the condition-triggered mobility management for SCG includes condition-triggered mobility management for the PSCell.

In some embodiments, the condition-triggered mobility management for MCG includes mobility management for the PCell and/or SCell.

For example, the condition-triggered mobility management for MCG includes, but is not limited to, one or more of: CHO, selective activation of cell groups for MCG, cell activation for the PCell, cell activation for SCells within the MCG, LTM for MCG.

In some embodiments, the condition-triggered mobility management for SCG includes mobility management for the PSCell and/or SCell.

For example, the condition-triggered mobility management for SCG includes, but is not limited to, one or more of: CPA, CPC, selective activation of cell groups for SCG, cell activation for the PSCell, cell activation for SCells within the SCG, LTM for SCG.

In some embodiments, the configuration information is sent by the network device to the terminal device. The network device may be the network device 410 shown in FIG. 4.

The network device in the present application may refer to one network device, or to the collective term for at least two network devices, for example, the network device is the collective term for the MN and SN.

In some embodiments, the configuration information is configured by the SN for the terminal device; or the configuration information is configured by the MN for the terminal device; or the configuration information is sent by the SN to the MN, and then sent by the MN to the terminal device; or the SN sends source information for generating the configuration information to the MN, and the MN generates the configuration information based on the received source information and sends the configuration information to the terminal device.

Step 530: determining an applicable cell corresponding to an execution condition of the condition-triggered mobility management.

The applicable cell refers to the cell used to evaluate the execution condition of the mobility management. That is, the applicable cell is the cell used to determine whether the execution condition of the mobility management is satisfied, or understood as, the applicable cell is the cell used to evaluate whether the execution condition of the mobility management is satisfied. The applicable cell may also be called "evaluation required cell", or "evaluation cell", etc.

The execution condition of the mobility management, or called the trigger condition of the mobility management, or called the activation condition of the mobility management. The execution condition of the mobility management can be understood as the condition that must be satisfied to execute the mobility management, or that the mobility management can be executed only when this condition is satisfied, or understood as, the mobility management must satisfy this condition to be executed.

In some embodiments, the terminal device determines the applicable cell corresponding to the execution condition of the mobility management based on the configuration information.

In summary, the method provided in the present application supports the terminal device to determine the applicable cell corresponding to the execution condition of the condition-triggered mobility management after receiving the configuration information used for the condition-triggered mobility management, thereby supporting the evaluation of the execution condition of the mobility management based on the correct applicable cell, thus achieving correct evaluation of the execution condition.

FIG. 6 shows a flowchart of a method for determining an applicable cell provided by some exemplary embodiments of the present application. The method is performed by the terminal device shown in FIG. 4. The method includes at least some of the following steps:
Step 610: receiving configuration information, where the configuration information is used for a condition-triggered mobility management.

The condition-triggered mobility management includes condition-triggered mobility management for MCG, and/or condition-triggered mobility management for SCG.

In some embodiments, the condition-triggered mobility management for MCG includes condition-triggered mobility management for the PCell; the condition-triggered mobility management for SCG includes condition-triggered mobility management for the PSCell.

In some embodiments, the condition-triggered mobility management for MCG includes mobility management for the PCell and/or SCell.

For example, the condition-triggered mobility management for MCG includes, but is not limited to, one or more of: CHO, selective activation of cell groups for MCG, cell activation for the PCell, cell activation for SCells within the MCG, LTM for MCG.

In some embodiments, the condition-triggered mobility management for SCG includes mobility management for the PSCell and/or SCell.

For example, the condition-triggered mobility management for SCG includes, but is not limited to, one or more of: CPA, CPC, selective activation of cell groups for SCG, cell activation for the PSCell, cell activation for SCells within the SCG, LTM for SCG.

In some embodiments, the configuration information is sent by the network device to the terminal device. The network device may be the network device 410 shown in FIG. 4.

In some embodiments, the configuration information is configured by the SN for the terminal device; or the configuration information is configured by the MN for the terminal device; or the configuration information is sent by the SN to the MN, and then sent by the MN to the terminal device; or the SN sends source information for generating the configuration information to the MN, and the MN generates the configuration information based on the received source information and sends the configuration information to the terminal device.

The configuration information includes the execution condition of the mobility management, and/or information for evaluating the execution condition of the mobility management.

Step 630: determining an applicable cell corresponding to the execution condition of the mobility management.

The applicable cell refers to the cell used to evaluate the execution condition of the mobility management. That is, the applicable cell is the cell used to determine whether the execution condition of the mobility management is satisfied, or understood as, the applicable cell is the cell used to evaluate whether the execution condition of the mobility management is satisfied. The applicable cell may also be called "evaluation required cell", or "evaluation cell", etc.

The execution condition of the mobility management, or called the trigger condition of the mobility management, or called the activation condition of the mobility management. The execution condition of the mobility management can be understood as the condition that must be satisfied to execute the mobility management, or that the mobility management can be executed only when this condition is satisfied, or understood as, the mobility management must satisfy this condition to be executed.

In some embodiments, the terminal device determines the applicable cell corresponding to the execution condition of the mobility management based on the configuration information.

In some embodiments, step 630 can be implemented as step 630a, and/or step 630b, and/or step 630c, and/or step 630d.

Step 630a: determining the applicable cell corresponding to the execution condition of the mobility management based on a type of the execution condition.

The type of the execution condition includes: an execution condition for condition-triggered mobility management for MCG, an execution condition for condition-triggered mobility management for SCG, an execution condition for condition-triggered mobility management for both the MCG and SCG, at least one thereof.

In some embodiments, the configuration information includes the execution condition of the mobility management.

In some embodiments, the execution condition of the mobility management includes a first execution condition and/or a second execution condition. The first execution condition includes an execution condition for condition-triggered mobility management for MCG, the second execution condition includes an execution condition for condition-triggered mobility management for SCG.

The first execution condition and the second execution condition correspond to different fields (Field, or called domains).

In some embodiments, the execution condition for condition-triggered mobility management for MCG includes an execution condition for CHO; and/or the execution condition for condition-triggered mobility management for SCG includes an execution condition for CPAC. CPAC includes CPA and/or CPC.

In some embodiments, the configuration information further includes a candidate configuration. The candidate configuration may also be called a candidate target configuration, or called candidate cell/cell group configuration. The candidate configuration can be understood as the message that needs to be applied when the execution condition of the mobility management included in the configuration information is satisfied.

In some embodiments, the candidate configuration corresponds to an RRC reconfiguration (RRCReconfiguration) message. It also can be understood as, the candidate configuration is carried in the RRC reconfiguration (RRCReconfiguration) message. It also can be understood as, the candidate configuration is the RRC reconfiguration message.

The candidate configuration is used to configure candidate cells and/or candidate cell groups. Candidate cells refer to candidate cells for mobility management, candidate cell groups refer to candidate cell groups for mobility management.

In some embodiments, the candidate configuration includes a candidate MCG configuration and/or a candidate SCG configuration. The first candidate cell is a candidate cell corresponding to the candidate MCG configuration, for example, a candidate PCell; the second candidate cell is a candidate cell corresponding to the candidate SCG configuration, for example, a candidate PSCell.

In some embodiments, the first candidate cell is determined through the serving cell configuration information (e.g., ServingCellConfigCommon) in the synchronization reconfiguration information (e.g., reconfigurationWithSync) within the candidate MCG configuration (e.g., masterCellGroup) in the candidate configuration. The serving cell configuration information includes at least one of a cell index (Index) or a Physical Cell Identity (PCI).

For example, the cell identity of the first candidate cell is the PCI or cell index indicated by the serving cell configuration included in the candidate MCG configuration.

In some embodiments, the second candidate cell is determined through the serving cell configuration information (e.g., ServingCellConfigCommon) in the synchronization reconfiguration information (e.g., reconfigurationWithSync) within the candidate SCG configuration (e.g., secondaryCellGroup) in the candidate configuration. The serving cell configuration information includes at least one of a cell index or PCI.

For example, the cell identity of the second candidate cell is the PCI or cell index indicated by the serving cell configuration included in the candidate SCG configuration.

In some embodiments, in a case where the type of the execution condition includes the first execution condition, determine the applicable cell corresponding to the first execution condition as the first candidate cell corresponding to the candidate configuration; and/or in a case where the type of the execution condition includes the second execution condition, determine the applicable cell corresponding to the second execution condition as the second candidate cell corresponding to the candidate configuration.

It also can be understood as, determining the applicable cell corresponding to the first execution condition as the first candidate cell corresponding to the candidate configuration; and/or determining the applicable cell corresponding to the second execution condition as the second candidate cell corresponding to the candidate configuration.

It also can be understood as, the first execution condition is associated with the first candidate cell corresponding to the candidate configuration; and/or the second execution condition is associated with the second candidate cell corresponding to the candidate configuration.

It also can be understood as, for an execution condition whose type is the first execution condition, the applicable cell is the first candidate cell corresponding to the candidate configuration; and/or for an execution condition whose type is the second execution condition, the applicable cell is the second candidate cell corresponding to the candidate configuration.

It also can be understood as, for the first execution condition, the applicable cell is the first candidate cell corresponding to the candidate configuration; and/or for the second execution condition, the applicable cell is the second candidate cell corresponding to the candidate configuration.

In some embodiments, the first execution condition corresponds to at least one first measurement identifier, the second execution condition corresponds to at least one second measurement identifier. It also can be understood as, the first execution condition is represented by at least one first measurement identifier, the second execution condition is represented by at least one second measurement identifier. It also can be understood as, the first execution condition indicates at least one first measurement identifier, the second execution condition indicates at least one second measurement identifier. It also can be understood as, the at least one first measurement identifier corresponds to the field corresponding to the first execution condition, the at least one second measurement identifier corresponds to the field corresponding to the second execution condition.

In some embodiments, in a case where the type of the execution condition includes the first execution condition, determine the applicable cell corresponding to the first measurement identifier as the first candidate cell corresponding to the candidate configuration; and/or in a case where the type of the execution condition includes the second execution condition, determine the applicable cell corresponding to the second measurement identifier as the second candidate cell corresponding to the candidate configuration.

It also can be understood as, determine the applicable cell corresponding to the first measurement identifier as the first candidate cell corresponding to the candidate configuration; and/or determine the applicable cell corresponding to the second measurement identifier as the second candidate cell corresponding to the candidate configuration.

It also can be understood as, the first measurement identifier is associated with the first candidate cell corresponding to the candidate configuration; and/or the second measurement identifier is associated with the second candidate cell corresponding to the candidate configuration.

It also can be understood as, for the first measurement identifier corresponding to the field corresponding to the first execution condition (i.e., the execution condition for CHO), the applicable cell is the candidate PCell corresponding to the candidate MCG configuration.

It also can be understood as, for the first measurement identifier corresponding to the field corresponding to the first execution condition, the applicable cell is the first candidate cell corresponding to the candidate configuration; for the second measurement identifier corresponding to the field corresponding to the second execution condition, the applicable cell is the second candidate cell corresponding to the candidate configuration.

It also can be understood as, for the first measurement identifier corresponding to an execution condition whose type is the first execution condition, the applicable cell is the first candidate cell corresponding to the candidate configuration; and/or for the second measurement identifier corresponding to an execution condition whose type is the second execution condition, the applicable cell is the second candidate cell corresponding to the candidate configuration.

It also can be understood as, for the first measurement identifier corresponding to the first execution condition, the applicable cell is the first candidate cell corresponding to the candidate configuration; and/or for the second measurement identifier corresponding to the second execution condition, the applicable cell is the second candidate cell corresponding to the candidate configuration.

Step 630b: determining the applicable cell corresponding to the execution condition of the mobility management based on indication information of the execution condition.

In some embodiments, the execution condition of the mobility management includes a third execution condition. The third execution condition includes an execution condition for condition-triggered mobility management for MCG, and/or an execution condition for condition-triggered mobility management for SCG.

Determining the applicable cell corresponding to the execution condition of the mobility management based on the indication information of the execution condition can also be understood as determining the applicable cell corresponding to the execution condition based on the indication information associated with the measurement identifier corresponding to the execution condition.

The indication information of the execution condition, or understood as the indicated content of the execution condition, or understood as the associated information of the execution condition.

In some embodiments, the indication information of the third execution condition includes at least one of the following:
- at least one third measurement identifier;
- a cell identifier associated with the third measurement identifier;
- a cell type associated with the third measurement identifier;
- an operation associated with the third measurement identifier.

In some embodiments, the third execution condition includes at least one entry (Entry), and the indication information of each entry includes at least one of the following:
- at least one third measurement identifier;
- a cell identifier associated with the third measurement identifier;
- a cell type associated with the third measurement identifier;
- an operation associated with the third measurement identifier.

The cell identifier associated with the third measurement identifier, the cell type associated with the third measurement identifier, and the operation associated with the third measurement identifier can all be understood as indication information associated with the third measurement identifier.

The cell identifier includes at least one of a cell index (Index) or a Physical Cell Identity (PCI).

The cell type associated with the third measurement identifier includes: at least one of the first candidate cell or the second candidate cell. Or, the cell type associated with the third measurement identifier includes: at least one of PCell or PSCell.

The operation associated with the third measurement identifier includes: at least one of triggering condition-triggered mobility management for MCG, triggering condition-triggered mobility management for SCG, not triggering condition-triggered mobility management for MCG, not triggering condition-triggered mobility management for SCG.

The operation associated with the third measurement identifier, or understood as the purpose of the third measurement identifier.

In some embodiments, the configuration information further includes a candidate configuration.

In some embodiments, the candidate configuration corresponds to an RRC reconfiguration (RRCReconfiguration) message. It also can be understood as, the candidate configuration is carried in the RRC reconfiguration (RRCReconfiguration) message.

The candidate configuration is used to configure candidate cells and/or candidate cell groups. Candidate cells refer to candidate cells for mobility management, candidate cell groups refer to candidate cell groups for mobility management.

In some embodiments, the candidate configuration includes a candidate MCG configuration and/or a candidate SCG configuration. The first candidate cell is a candidate cell corresponding to the candidate MCG configuration, for example, a candidate PCell; the second candidate cell is a candidate cell corresponding to the candidate SCG configuration, for example, a candidate PSCell.

In some embodiments, the first candidate cell is determined through the serving cell configuration information (e.g., ServingCellConfigCommon) in the synchronization reconfiguration information (e.g., reconfigurationWithSync) within the candidate MCG configuration (e.g., masterCellGroup) in the candidate configuration. The serving cell configuration information includes at least one of a cell index (Index) or a Physical Cell Identity (PCI).

For example, the cell identity of the first candidate cell is the PCI or cell index indicated by the serving cell configuration included in the candidate MCG configuration.

In some embodiments, the second candidate cell is determined through the serving cell configuration information (e.g., ServingCellConfigCommon) in the synchronization reconfiguration information (e.g., reconfigurationWithSync) within the candidate SCG configuration (e.g., secondaryCellGroup) in the candidate configuration. The serving cell configuration information includes at least one of a cell index or PCI.

For example, the cell identity of the second candidate cell is the PCI or cell index indicated by the serving cell configuration included in the candidate SCG configuration.

In some embodiments, based on the cell identifier associated with the third measurement identifier, determine the applicable cell corresponding to the third execution condition and/or the third measurement identifier.

It also can be understood as, determine the cell corresponding to the cell identifier associated with the third measurement identifier as the applicable cell corresponding to the third execution condition and/or the third measurement identifier. It also can be understood as, the applicable cell corresponding to the third execution condition and/or the third measurement identifier is the cell corresponding to the cell identifier associated with the third measurement identifier.

In some embodiments, based on the cell type associated with the third measurement identifier, determining the applicable cell corresponding to the third execution condition and/or the third measurement identifier includes at least one of the following:
- In a case where the cell type associated with the third measurement identifier includes the first candidate cell, determine the first candidate cell as the applicable cell corresponding to the third execution condition and/or the third measurement identifier;
- In a case where the cell type associated with the third measurement identifier does not include the first candidate cell, do not determine the first candidate cell as the applicable cell corresponding to the third execution condition and/or the third measurement identifier;
- In a case where the cell type associated with the third measurement identifier includes the second candidate cell, determine the second candidate cell as the applicable cell corresponding to the third execution condition and/or the third measurement identifier;
- In a case where the cell type associated with the third measurement identifier does not include the second candidate cell, do not determine the second candidate cell as the applicable cell corresponding to the third execution condition and/or the third measurement identifier.

It also can be understood as at least one of the following:
- In a case where the indication information includes the cell type associated with the third measurement identifier and the cell type includes the first candidate cell, the applicable cell corresponding to the third execution condition and/or the third measurement identifier is the first candidate cell;
- In a case where the indication information includes the cell type associated with the third measurement identifier and the cell type includes the second candidate cell, the applicable cell corresponding to the third execution condition and/or the third measurement identifier is the second candidate cell.

In some embodiments, based on the operation associated with the third measurement identifier, determining the applicable cell corresponding to the third execution condition and/or the third measurement identifier includes at least one of the following:
- In a case where the operation associated with the third measurement identifier includes triggering condition-triggered mobility management for MCG, determine the first candidate cell as the applicable cell corresponding to the third execution condition and/or the third measurement identifier;
- In a case where the operation associated with the third measurement identifier does not include triggering condition-triggered mobility management for MCG, do not determine the first candidate cell as the applicable cell corresponding to the third execution condition and/or the third measurement identifier;
- In a case where the operation associated with the third measurement identifier includes triggering condition-triggered mobility management for SCG, determine the second candidate cell as the applicable cell corresponding to the third execution condition and/or the third measurement identifier;
- In a case where the operation associated with the third measurement identifier does not include triggering condition-triggered mobility management for SCG, do not determine the second candidate cell as the applicable cell corresponding to the third execution condition and/or the third measurement identifier.

It also can be understood as at least one of the following:
- In a case where the indication information includes the operation associated with the third measurement identifier and the operation includes triggering condition-triggered mobility management for MCG, the applicable cell corresponding to the third execution condition and/or the third measurement identifier is the first candidate cell;
- In a case where the indication information includes the operation associated with the third measurement identifier and the operation includes triggering condition-triggered mobility management for SCG, the applicable cell corresponding to the third execution condition and/or the third measurement identifier is the second candidate cell.

In some embodiments, the execution condition of the mobility management includes at least one fourth execution condition. The fourth execution condition includes an execution condition for condition-triggered mobility management for MCG, and/or an execution condition for condition-triggered mobility management for SCG.

In some embodiments, each fourth execution condition is associated with an indication information, and each indication information includes at least one of the following:
- Cell identifier associated with the fourth execution condition;
- Cell type associated with the fourth execution condition;
- Operation associated with the fourth execution condition.

The cell identifier includes at least one of a cell index or PCI.

The cell type associated with the fourth execution condition includes: at least one of the first candidate cell or the second candidate cell. Or, the cell type associated with the fourth execution condition includes: at least one of PCell or PSCell.

The operation associated with the fourth execution condition includes: at least one of triggering condition-triggered mobility management for MCG, triggering condition-triggered mobility management for SCG, not triggering condition-triggered mobility management for MCG, not triggering condition-triggered mobility management for SCG.

The operation associated with the fourth execution condition, or understood as the purpose of the fourth execution condition.

In some embodiments, based on the cell identifier associated with the fourth execution condition, determine the applicable cell corresponding to the fourth execution condition.

It also can be understood as, determine the cell corresponding to the cell identifier associated with the fourth execution condition as the applicable cell corresponding to the fourth execution condition. It also can be understood as, the applicable cell corresponding to the fourth execution condition is the cell corresponding to the cell identifier associated with the fourth execution condition.

In some embodiments, based on the cell type associated with the fourth execution condition, determining the applicable cell corresponding to the fourth execution condition includes at least one of the following:
- In a case where the cell type associated with the fourth execution condition includes the first candidate cell, determine the first candidate cell as the applicable cell corresponding to the fourth execution condition;
- In a case where the cell type associated with the fourth execution condition does not include the first candidate cell, do not determine the first candidate cell as the applicable cell corresponding to the fourth execution condition;
- In a case where the cell type associated with the fourth execution condition includes the second candidate cell, determine the second candidate cell as the applicable cell corresponding to the fourth execution condition;
- In a case where the cell type associated with the fourth execution condition does not include the second candidate cell, do not determine the second candidate cell as the applicable cell corresponding to the fourth execution condition.

It also can be understood as at least one of the following:
- In a case where the indication information includes the cell type associated with the fourth execution condition and the cell type includes the first candidate cell, the applicable cell corresponding to the fourth execution condition is the first candidate cell;
- In a case where the indication information includes the cell type associated with the fourth execution condition and the cell type includes the second candidate cell, the applicable cell corresponding to the fourth execution condition is the second candidate cell.

In some embodiments, based on the operation associated with the fourth execution condition, determining the applicable cell corresponding to the fourth execution condition includes at least one of the following:
- In a case where the operation associated with the fourth execution condition includes triggering condition-triggered mobility management for MCG, determine the first candidate cell as the applicable cell corresponding to the fourth execution condition;
- In a case where the operation associated with the fourth execution condition does not include triggering condition-triggered mobility management for MCG, do not determine the first candidate cell as the applicable cell corresponding to the fourth execution condition;
- In a case where the operation associated with the fourth execution condition includes triggering condition-triggered mobility management for SCG, determine the second candidate cell as the applicable cell corresponding to the fourth execution condition;
- In a case where the operation associated with the fourth execution condition does not include triggering condition-triggered mobility management for SCG, do not determine the second candidate cell as the applicable cell corresponding to the fourth execution condition.

It also can be understood as at least one of the following:
- In a case where the indication information includes the operation associated with the fourth execution condition and the operation includes triggering condition-triggered mobility management for MCG, the applicable cell corresponding to the fourth execution condition is the first candidate cell;
- In a case where the indication information includes the operation associated with the fourth execution condition and the operation includes triggering condition-triggered mobility management for SCG, the applicable cell corresponding to the fourth execution condition is the second candidate cell.

Step 630c: determining the applicable cell corresponding to the execution condition of the mobility management based on the candidate configuration included in the configuration information.

In some embodiments, the configuration information includes the execution condition of the mobility management and the candidate configuration.

In some embodiments, the candidate configuration includes a candidate MCG configuration and/or a candidate SCG configuration.

Determining the applicable cell corresponding to the execution condition of the mobility management based on the candidate configuration included in the configuration information can be understood as determining the applicable cell corresponding to the execution condition of the mobility management based on indication information of the candidate configuration.

In some embodiments, the candidate configuration corresponds to an RRC reconfiguration (RRCReconfiguration) message. It also can be understood as, the candidate configuration is carried in the RRC reconfiguration (RRCReconfiguration) message.

The candidate configuration is used to configure candidate cells and/or candidate cell groups. Candidate cells refer to candidate cells for mobility management, candidate cell groups refer to candidate cell groups for mobility management.

In some embodiments, the candidate configuration includes a candidate MCG configuration and/or a candidate SCG configuration. The first candidate cell is a candidate cell corresponding to the candidate MCG configuration, for example, a candidate PCell; the second candidate cell is a candidate cell corresponding to the candidate SCG configuration, for example, a candidate PSCell.

In some embodiments, the first candidate cell is determined through the serving cell configuration information (e.g., ServingCellConfigCommon) in the synchronization reconfiguration information (e.g., reconfigurationWithSync) within the candidate MCG configuration (e.g., masterCellGroup) in the candidate configuration. The serving cell configuration information includes at least one of a cell index (Index) or a Physical Cell Identity (PCI).

For example, the cell identity of the first candidate cell is the PCI or cell index indicated by the serving cell configuration included in the candidate MCG configuration.

In some embodiments, the second candidate cell is determined through the serving cell configuration information (e.g., ServingCellConfigCommon) in the synchronization reconfiguration information (e.g., reconfigurationWithSync) within the candidate SCG configuration (e.g., secondaryCellGroup) in the candidate configuration. The serving cell configuration information includes at least one of a cell index or PCI.

For example, the cell identity of the second candidate cell is the PCI or cell index indicated by the serving cell configuration included in the candidate SCG configuration.

In some embodiments, the indication information of the candidate configuration includes at least one of the following:
- execution condition indicated by the candidate MCG configuration;
- execution condition indicated by the candidate SCG configuration;
- measurement identifier indicated by the candidate MCG configuration;
- measurement identifier indicated by the candidate SCG configuration.

In some embodiments, determining the applicable cell corresponding to the execution condition of the mobility management includes at least one of the following:
- determine the applicable cell corresponding to the execution condition indicated by the candidate MCG configuration as the first candidate cell;
- determine the applicable cell corresponding to the measurement identifier indicated by the candidate MCG configuration as the first candidate cell;
- determine the applicable cell corresponding to the execution condition indicated by the candidate SCG configuration as the second candidate cell;
- determine the applicable cell corresponding to the measurement identifier indicated by the candidate SCG configuration as the second candidate cell.

Step 630d: determining the applicable cell corresponding to the execution condition of the mobility management based on the configuration information.

In some embodiments, the configuration information includes the execution condition of the mobility management and a candidate configuration.

The execution condition of the mobility management includes a fifth execution condition and/or a sixth execution condition.

The fifth execution condition includes an execution condition for condition-triggered mobility management for SCG. The fifth execution condition corresponds to at least one fourth measurement identifier, or understood as, the fifth execution condition indicates at least one fourth measurement identifier.

For example, the fifth execution condition is condExecutionCondSCG.

The candidate configuration includes a candidate MCG configuration and/or a candidate SCG configuration.

Determining the applicable cell corresponding to the execution condition of the mobility management based on the configuration information includes at least one of the following:
- In a case where the configuration information includes the fifth execution condition, determine the applicable cell corresponding to the fifth execution condition and/or the applicable cell corresponding to the fourth measurement identifier corresponding to the fifth execution condition as the second candidate cell corresponding to the candidate configuration;
- In a case where the configuration information includes the fifth execution condition, determine the applicable cell corresponding to the fifth execution condition and/or the applicable cell corresponding to the fourth measurement identifier corresponding to the fifth execution condition as the second candidate cell corresponding to the candidate configuration.

The sixth execution condition includes an execution condition for condition-triggered mobility management for SCG or MCG. The sixth execution condition corresponds to at least one fifth measurement identifier, or understood as, the sixth execution condition indicates at least one fifth measurement identifier.

For example, the sixth execution condition is condExecutionCond.

The candidate configuration includes a candidate MCG configuration and/or a candidate SCG configuration.

In some embodiments, determining the applicable cell corresponding to the execution condition of the mobility management based on the configuration information includes: determining the applicable cell corresponding to the execution condition of the mobility management based on the execution condition and the configuration manner of the execution condition.

In some embodiments, determining the applicable cell corresponding to the execution condition of the mobility management based on the execution condition and the configuration manner of the execution condition includes at least one of the following:
- In a case where the configuration information includes the sixth execution condition, and the configuration manner of the configuration information is a first configuration manner, determine the applicable cell corresponding to the sixth execution condition and/or the applicable cell corresponding to the fifth measurement identifier corresponding to the sixth execution condition as the second candidate cell corresponding to the candidate configuration;
- In a case where the configuration information includes the sixth execution condition, and the configuration manner of the configuration information is a first configuration manner, determine the applicable cell corresponding to the sixth execution condition and/or the applicable cell corresponding to the fifth measurement identifier corresponding to the sixth execution condition as the second candidate cell corresponding to the candidate configuration.

where the sixth execution condition is used for condition-triggered mobility management of the MCG and/or condition-triggered mobility management for SCG.
where the first configuration manner includes: configured by a Secondary Node (SN) and sent to the terminal device by the SN; or configured by an SN and sent to the terminal device by a Master Node (MN).

For example, the first configuration manner includes at least one of the following:
- configured via Signaling Radio Bearer (SRB) 3;
- configured via nr-SCG;
- configured via nr-SecondaryCellGroupConfig.

SRB3 is used to carry RRC messages, or SRB3 messages carry RRC messages.

In some embodiments, determining the applicable cell corresponding to the execution condition of the mobility management based on the configuration information includes: determining the applicable cell corresponding to the execution condition of the mobility management based on the execution condition and the associated event corresponding to the measurement identifier of the execution condition.

In some embodiments, determining the applicable cell corresponding to the execution condition of the mobility management based on the execution condition and the associated event corresponding to the measurement identifier of the execution condition includes at least one of the following:
- In a case where the configuration information includes the sixth execution condition, and the associated event corresponding to the fifth measurement identifier includes a first trigger event, determine the applicable cell corresponding to the fifth measurement identifier as the first candidate cell corresponding to the candidate configuration;
- In a case where the configuration information includes the sixth execution condition, and the associated event corresponding to the fifth measurement identifier includes a second trigger event, determine the applicable cell corresponding to the fifth measurement identifier as the second candidate cell corresponding to the candidate configuration.

The first trigger event includes an event triggering condition-triggered mobility management for MCG, the second trigger event includes an event triggering condition-triggered mobility management for SCG.

In some embodiments, the first trigger event includes conditional event A3 and/or conditional event A5; the second trigger event includes: conditional event A4.
- conditional event A3: Conditional reconfiguration candidate becomes amount of offset better than PCell/PSCell;
- conditional event A5: PCell/PSCell becomes worse than absolute threshold1 AND conditional reconfiguration candidate becomes better than another absolute threshold2;
- conditional event A4: Conditional reconfiguration candidate becomes better than absolute threshold.

Step 650: determining whether the execution condition is satisfied based on the applicable cell corresponding to the execution condition.

In some embodiments, determine whether the execution condition is satisfied based on a measurement result of the applicable cell corresponding to the execution condition.

In some embodiments, determine whether an associated event of the execution condition is satisfied based on the measurement result of the applicable cell corresponding to the execution condition; and/or
determine whether an associated event of the measurement identifier corresponding to the execution condition is satisfied based on the measurement result of the applicable cell corresponding to the execution condition.

The measurement result includes at least one of: a Layer 3 (L3) measurement result, a Layer 2 (L2) measurement result, or a Layer 1 (L1) measurement result.

Layer 1 includes the Physical (PHY) layer, Layer 2 includes the Media Access Control (MAC) layer, Radio Link Control (RLC) layer, and Packet Data Convergence Protocol (PDCP) layer, Layer 3 includes the Radio Resource Control (RRC) layer.

The associated event includes an entry condition and/or a leaving condition. The associated event may also be called an associated condition.

Determining whether the associated event of the execution condition is satisfied includes: determining whether the entry condition and/or leaving condition of the associated event of the execution condition is satisfied.

Determining whether the associated event of the measurement identifier corresponding to the execution condition is satisfied includes: determining whether the entry condition and/or leaving condition of the associated event of the measurement identifier corresponding to the execution condition is satisfied.

In summary, the method provided in the present application supports the terminal device to determine the applicable cell corresponding to the execution condition of the condition-triggered mobility management after receiving the configuration information used for the condition-triggered mobility management, thereby supporting the evaluation of the execution condition of the mobility management based on the correct applicable cell, thus achieving correct evaluation of the execution condition. Moreover, multiple feasible methods for determining the applicable cell are provided, enabling the terminal device to determine the applicable cell through an appropriate method in different scenarios when receiving different configuration information, improving the robustness of condition-triggered mobility, and enhancing the flexibility and accuracy for the terminal device to determine the applicable cell and evaluate the execution condition.

FIG. 7 shows a flowchart of a method for determining an applicable cell provided by some exemplary embodiments of the present application. The method is performed by the network device shown in FIG. 4. The method includes at least some of the following steps:
Step 710: sending configuration information, where the configuration information is used for a condition-triggered mobility management.

The condition-triggered mobility management includes condition-triggered mobility management for MCG, and/or condition-triggered mobility management for SCG.

In some embodiments, the condition-triggered mobility management for MCG includes condition-triggered mobility management for the PCell; the condition-triggered mobility management for SCG includes condition-triggered mobility management for the PSCell.

In some embodiments, the condition-triggered mobility management for MCG includes mobility management for the PCell and/or SCell.

For example, the condition-triggered mobility management for MCG includes, but is not limited to, one or more of: CHO, selective activation of cell groups for MCG, cell activation for the PCell, cell activation for SCells within the MCG, LTM for MCG.

In some embodiments, the condition-triggered mobility management for SCG includes mobility management for the PSCell and/or SCell.

For example, the condition-triggered mobility management for SCG includes, but is not limited to, one or more of: CPA, CPC, selective activation of cell groups for SCG, cell activation for the PSCell, cell activation for SCells within the SCG, LTM for SCG.

In some embodiments, the configuration information is sent by the network device to the terminal device.

In some embodiments, the configuration information is configured by the SN for the terminal device; or the configuration information is configured by the MN for the terminal device; or the configuration information is sent by the SN to the MN, and then sent by the MN to the terminal device; or the SN sends source information for generating the configuration information to the MN, and the MN generates the configuration information based on the received source information and sends the configuration information to the terminal device.

The configuration information is used for the terminal device to determine the applicable cell corresponding to the execution condition of the mobility management.

The applicable cell refers to the cell used to evaluate the execution condition of the mobility management. That is, the applicable cell is the cell used to determine whether the execution condition of the mobility management is satisfied, or understood as, the applicable cell is the cell used to evaluate whether the execution condition of the mobility management is satisfied. The applicable cell may also be called "evaluation required cell", or "evaluation cell", etc.

The execution condition of the mobility management, or called the trigger condition of the mobility management, or called the activation condition of the mobility management. The execution condition of the mobility management can be understood as the condition that must be satisfied to execute the mobility management, or that the mobility management can be executed only when this condition is satisfied, or understood as, the mobility management must satisfy this condition to be executed.

In some embodiments, the configuration information includes at least one of the execution condition of the mobility management, a candidate configuration, or a configuration identifier.

In some embodiments, the mobility management includes: condition-triggered mobility management for a master cell group MCG; and/or condition-triggered mobility management for a secondary cell group SCG.

In some embodiments, the configuration information includes the execution condition; the configuration information is used for the terminal device to determine the applicable cell corresponding to the execution condition based on a type of the execution condition.

In some embodiments, the execution condition includes a first execution condition and/or a second execution condition; where the first execution condition includes an execution condition for condition-triggered mobility management for MCG, and the second execution condition includes an execution condition for condition-triggered mobility management for SCG.

In some embodiments, the configuration information includes the execution condition; the configuration information is used for the terminal device to determine the applicable cell corresponding to the execution condition based on indication information of the execution condition.

The indication information of the execution condition, or understood as the indicated content of the execution condition, or understood as the associated information of the execution condition.

For example, the indication information of the execution condition includes at least one of the following:
- at least one measurement identifier;
- cell identifier associated with the measurement identifier;
- cell type associated with the measurement identifier;
- operation associated with the measurement identifier.

In some embodiments, the execution condition includes a third execution condition; the third execution condition includes an execution condition for condition-triggered mobility management for MCG and an execution condition for condition-triggered mobility management for SCG.

In some embodiments, the execution condition includes at least one fourth execution condition, the fourth execution condition includes an execution condition for condition-triggered mobility management for MCG and/or an execution condition for condition-triggered mobility management for SCG.

In some embodiments, the configuration information includes a candidate configuration; the configuration information is used for the terminal device to determine the applicable cell corresponding to the execution condition based on indication information of the candidate configuration.

In some embodiments, the candidate configuration includes a candidate MCG configuration and/or a candidate SCG configuration; the indication information of the candidate configuration includes at least one of the following: an execution condition indicated by the candidate MCG configuration; an execution condition indicated by the candidate SCG configuration; a measurement identifier indicated by the candidate MCG configuration; a measurement identifier indicated by the candidate SCG configuration.

In some embodiments, the configuration information is used for the terminal device to determine the applicable cell corresponding to the execution condition based on the configuration information; or the configuration information is used for the terminal device to determine the applicable cell corresponding to the execution condition based on a configuration manner of the configuration information.

The configuration manner of the configuration information, or understood as the configuration method of the configuration information, or understood as the transmission manner of the configuration information, or understood as the sending manner of the configuration information.

For example, the configuration manner of the configuration information includes at least one of the following:
- configured by the SN and sent to the terminal device by the SN, e.g., configured via SRB3;
- configured by the SN and sent to the terminal device by the MN, e.g., configured via nr-SCG or via nr-SecondaryCellGroupConfig.

In some embodiments, the execution condition for condition-triggered mobility management for MCG includes an execution condition for CHO; the execution condition for condition-triggered mobility management for SCG includes an execution condition for conditional CPAC.

In summary, the method provided in the present application supports the network device to send configuration information used for condition-triggered mobility management to the terminal device, supporting the terminal device to determine the applicable cell corresponding to the execution condition of the mobility management based on this configuration information, thereby supporting the terminal device to evaluate the execution condition of the mobility management based on the correct applicable cell, thus achieving correct evaluation of the execution condition by the terminal device.

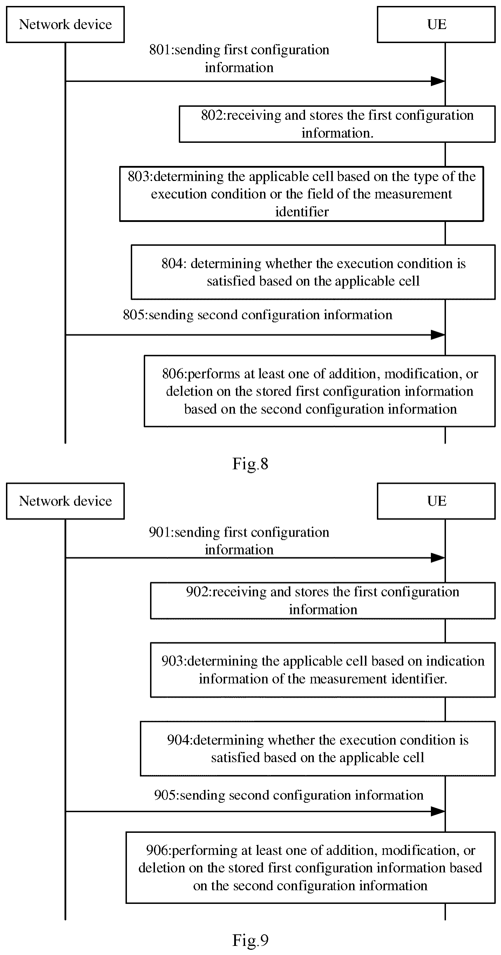

FIG. 8 shows a schematic flowchart of a method for determining an applicable cell provided by some exemplary embodiments of this application. The method is executed by the network device and terminal device shown in FIG. 4. The steps on the network device side can be implemented separately as a network-side applicable cell determination method, and the steps on the terminal device side can be implemented separately as a terminal-side applicable cell determination method. The method includes at least part of the following steps, and does not limit the execution order of the following steps:
Step 801: the network device sends first configuration information to the terminal device.

The first configuration information is used for condition-triggered mobility management. The first configuration information includes a configuration ID, an execution condition, and a candidate configuration.

Each piece of first configuration information has a unique configuration ID corresponding to it.

The execution condition includes a first execution condition and a second execution condition. The first execution condition and the second execution condition correspond to different fields respectively.

For example, the first execution condition includes an execution condition for CHO (Conditional Handover), and the second execution condition includes an execution condition for CPAC (Conditional Primary Secondary Cell Addition/Change). where CPAC includes CPA (Conditional PSCell Addition) and/or CPC (Conditional PSCell Change).

The candidate configuration corresponds to an RRC Reconfiguration (RRCReconfiguration) message. It also can be understood as, the candidate configuration is carried in the RRC Reconfiguration (RRCReconfiguration) message.

The candidate configuration is used to configure a candidate cell and/or a candidate cell group. The candidate cell refers to a candidate cell for mobility management, and the candidate cell group refers to a candidate cell group for mobility management. The candidate configuration includes a candidate MCG configuration and/or a candidate SCG configuration. A candidate cell corresponding to the candidate MCG configuration is a first candidate cell, and a candidate cell corresponding to the candidate SCG configuration is a second candidate cell.

For example, the first candidate cell is a candidate PCell corresponding to the candidate MCG configuration; the second candidate cell is a candidate PSCell corresponding to the candidate SCG configuration.

The cell identifier of the first candidate cell is the PCI or cell index indicated in the serving cell configuration information (e.g., ServingCellConfigCommon) in the synchronization reconfiguration information (e.g., reconfiguration WithSync) in the candidate MCG configuration (e.g., masterCellGroup) in the candidate configuration.

The cell identifier of the second candidate cell is the PCI or cell index indicated in the serving cell configuration information (e.g., ServingCellConfigCommon) in the synchronization reconfiguration information (e.g., reconfigurationWithSync) in the candidate SCG configuration (e.g., secondaryCellGroup) in the candidate configuration.

Step 802: the terminal device receives and stores the first configuration information.

For example, after receiving the first configuration information, the terminal device stores the first configuration information via the variable VarConditionalReconfig.

Step 803: the terminal device determines the applicable cell based on the type of the execution condition or the field of the measurement identifier.

The first execution condition is associated with a candidate PCell corresponding to a candidate MCG configuration included in the candidate configuration, and this candidate PCell is the applicable cell corresponding to the first execution condition.

The second execution condition is associated with a candidate PSCell corresponding to a candidate SCG configuration included in the candidate configuration, and this candidate PSCell is the applicable cell corresponding to the second execution condition.

The first execution condition indicates at least one first measurement identifier, and the second execution condition indicates at least one second measurement identifier.

The first measurement identifier is associated with a candidate PCell corresponding to a candidate MCG configuration included in the candidate configuration, and this candidate PCell is the applicable cell corresponding to the first measurement identifier. It also can be understood as, the field corresponding to the first measurement identifier corresponds to the first execution condition (i.e., the execution condition for CHO), and the applicable cell corresponding to the first measurement identifier is the candidate PCell corresponding to the candidate MCG configuration.

The second measurement identifier is associated with a candidate PSCell corresponding to a candidate SCG configuration included in the candidate configuration, and this candidate PSCell is the applicable cell corresponding to the second measurement identifier. It also can be understood as, the field corresponding to the second measurement identifier corresponds to the second execution condition (i.e., the execution condition for CPAC), and the applicable cell corresponding to the second measurement identifier is the candidate PSCell corresponding to the candidate SCG configuration.

Step 804: the terminal device determines whether the execution condition is satisfied based on the applicable cell.

The terminal device evaluates the first execution condition based on a measurement result of the first candidate cell. The measurement result of the first candidate cell includes at least one of a Layer 3 measurement result, a Layer 2 measurement result, or a Layer 1 measurement result.

When all associated events corresponding to all measurement identifiers corresponding to the first execution condition are satisfied, it is determined that the first execution condition is satisfied. Or, when some associated events corresponding to all measurement identifiers corresponding to the first execution condition are satisfied, it is determined that the first execution condition is satisfied. Or, when all associated events corresponding to some measurement identifiers corresponding to the first execution condition are satisfied, it is determined that the first execution condition is satisfied. Or, when some associated events corresponding to some measurement identifiers corresponding to the first execution condition are satisfied, it is determined that the first execution condition is satisfied.

The terminal device evaluates the second execution condition based on a measurement result of the second candidate cell. The measurement result of the second candidate cell includes at least one of a Layer 3 measurement result, a Layer 2 measurement result, or a Layer 1 measurement result.

When all associated events corresponding to all measurement identifiers corresponding to the second execution condition are satisfied, it is determined that the second execution condition is satisfied. Or, when some associated events corresponding to all measurement identifiers corresponding to the second execution condition are satisfied, it is determined that the second execution condition is satisfied. Or, when all associated events corresponding to some measurement identifiers corresponding to the second execution condition are satisfied, it is determined that the second execution condition is satisfied. Or, when some associated events corresponding to some measurement identifiers corresponding to the second execution condition are satisfied, it is determined that the second execution condition is satisfied.

Or, the terminal device evaluates whether an event corresponding to at least one measurement identifier corresponding to the applicable cell is satisfied based on the applicable cell. For example, the terminal device evaluates whether an associated event/trigger event/entry condition/leaving condition corresponding to at least one first measurement identifier corresponding to the first execution condition is satisfied, based on the measurement result of the first candidate cell. For another example, the terminal device evaluates whether an associated event/trigger event/entry condition/leaving condition corresponding to at least one second measurement identifier corresponding to the second execution condition is satisfied, based on the measurement result of the second candidate cell.

Step 805: the network device sends second configuration information to the terminal device.

The second configuration information is used for reconfiguration of the first configuration information, including reconfiguration of all or part of configuration parameters/information, such as at least one of addition, modification, or deletion. For example, the second configuration information is sent carried in an RRC message.

Step 806: the terminal device performs at least one of addition, modification, or deletion on the stored first configuration information based on the second configuration information.

After the terminal device adds, and/or modifies, and/or deletes the stored first configuration information, an updated first configuration information is obtained.

In some embodiments, based on the updated first configuration information, the terminal device executes step 803 and/or step 804 again.

In summary, the method provided in this application, through the configuration information exchanged between the network device and the terminal device, supports the terminal device in determining the candidate cell corresponding to the execution condition and/or the measurement identifier based on the type of the execution condition or the field corresponding to the measurement identifier. When different types of execution conditions exist in the same configuration information, or different execution conditions are indicated by different fields, this method is convenient and fast, improves the simplicity of the applicable cell determination method, supports the terminal device in evaluating the execution condition of the mobility management based on the correct applicable cell, thereby realizing correct evaluation of the execution condition by the terminal device.

FIG. 9 shows a schematic flowchart of a method for determining an applicable cell provided by some exemplary embodiments of this application. The method is executed by the network device and terminal device shown in FIG. 4. The steps on the network device side can be implemented separately as a network-side applicable cell determination method, and the steps on the terminal device side can be implemented separately as a terminal-side applicable cell determination method. The method includes at least part of the following steps, and does not limit the execution order of the following steps:
Step 901: the network device sends first configuration information to the terminal device.

The first configuration information is used for condition-triggered mobility management. The first configuration information includes a configuration ID, an execution condition, and a candidate configuration.

Each piece of first configuration information has a unique configuration ID corresponding to it.

The execution condition includes a third execution condition. The third execution condition corresponds to one field. The third execution condition indicates at least one third measurement identifier.

For example, the third execution condition includes an execution condition for CHO and/or CPAC. CPAC includes CPA and/or CPC.

The candidate configuration corresponds to an RRC Reconfiguration (RRCReconfiguration) message. It also can be understood as, the candidate configuration is carried in the RRC Reconfiguration (RRCReconfiguration) message.

The candidate configuration is used to configure a candidate cell and/or a candidate cell group. The candidate cell refers to a candidate cell for mobility management, and the candidate cell group refers to a candidate cell group for mobility management. The candidate configuration includes a candidate MCG configuration and/or a candidate SCG configuration. A candidate cell corresponding to the candidate MCG configuration is a first candidate cell, and a candidate cell corresponding to the candidate SCG configuration is a second candidate cell.

For example, the first candidate cell is a candidate PCell corresponding to the candidate MCG configuration; the second candidate cell is a candidate PSCell corresponding to the candidate SCG configuration.

The cell identifier of the first candidate cell is the PCI or cell index indicated in the serving cell configuration information (e.g., ServingCellConfigCommon) in the synchronization reconfiguration information (e.g., reconfigurationWithSync) in the candidate MCG configuration (e.g., masterCellGroup) in the candidate configuration.

The cell identifier of the second candidate cell is the PCI or cell index indicated in the serving cell configuration information (e.g., ServingCellConfigCommon) in the synchronization reconfiguration information (e.g., reconfigurationWithSync) in the candidate SCG configuration (e.g., secondaryCellGroup) in the candidate configuration.

Step 902: the terminal device receives and stores the first configuration information.

For example, after receiving the first configuration information, the terminal device stores the first configuration information via the variable VarConditionalReconfig.

Step 903: the terminal device determines the applicable cell based on indication information of the measurement identifier.

The terminal device determines the applicable cell corresponding to the third measurement identifier and/or the third execution condition based on indication information of the third measurement identifier.

In some embodiments, the indication information of the third execution condition includes at least one of the following:
- at least one third measurement identifier;
- a cell identifier associated with a third measurement identifier;
- a cell type associated with a third measurement identifier;
- an operation associated with a third measurement identifier.

In some embodiments, the third execution condition includes at least one entry, and indication information of each entry includes at least one of the following:
- at least one third measurement identifier;
- a cell identifier associated with a third measurement identifier;
- a cell type associated with a third measurement identifier;
- an operation associated with a third measurement identifier.

The cell identifier associated with the third measurement identifier, the cell type associated with the third measurement identifier, and the operation associated with the third measurement identifier can all be understood as indication information associated with the third measurement identifier, or indication information of the third measurement identifier.

The cell identifier includes at least one of a cell index or a PCI.

The cell type associated with the third measurement identifier includes at least one of: the first candidate cell, or the second candidate cell. Or, the cell type associated with the third measurement identifier includes at least one of: a PCell or a PSCell.

In some embodiments, the indication information includes the cell type associated with the third measurement identifier, and the indication information includes one or more of:

Associated with the first candidate cell, associated with the second candidate cell, not associated with the first candidate cell, not associated with the second candidate cell, associated with a PCell, associated with a PSCell, not associated with a PCell, not associated with a PSCell.

The operation associated with the third measurement identifier includes at least one of: triggering condition-triggered mobility management for MCG, triggering condition-triggered mobility management for SCG, not triggering condition-triggered mobility management for MCG, not triggering condition-triggered mobility management for SCG.

The operation associated with the third measurement identifier, or understood as, the purpose of the third measurement identifier.

In some embodiments, the indication information includes the operation associated with the third measurement identifier or the purpose of the third measurement identifier, including one or more of: for triggering CHO, for triggering CPAC, not for triggering CHO, not for triggering CPAC.

In some embodiments, the indication information is determined by the presence or absence of the indication information. For example, if indication information of the third measurement identifier exists in the first configuration information or in the first configuration information stored by the terminal device, for example, information of "third measurement identifier associated with the first candidate cell" exists, then it is determined that the indication information of the third measurement identifier includes "third measurement identifier associated with the first candidate cell". For another example, if information of "third measurement identifier not used for triggering CPAC" exists in the first configuration information or in the first configuration information stored by the terminal device, then it is determined that the indication information of the third measurement identifier includes "third measurement identifier not used for triggering CPAC".

In some embodiments, the indication information is determined by the value of the indication information. For example, if the value corresponding to the cell type associated with the third measurement identifier in the first configuration information or in the first configuration information stored by the terminal device is a first value (e.g., "1"), then it is determined that the indication information of the third measurement identifier includes "third measurement identifier associated with the first candidate cell". For another example, if the value corresponding to the cell type associated with the third measurement identifier in the first configuration information or in the first configuration information stored by the terminal device is a second value (e.g., "0"), then it is determined that the indication information of the third measurement identifier includes "third measurement identifier not associated with the first candidate cell". For another example, if the value corresponding to the cell type associated with the third measurement identifier in the first configuration information or in the first configuration information stored by the terminal device is a third value (e.g., "2"), then it is determined that the indication information of the third measurement identifier includes "third measurement identifier associated with the second candidate cell". For another example, if the value corresponding to the cell type associated with the third measurement identifier in the first configuration information or in the first configuration information stored by the terminal device is a fourth value (e.g., "3"), then it is determined that the indication information of the third measurement identifier includes "third measurement identifier not associated with the second candidate cell".

If the indication information of the third execution condition includes a cell identifier associated with the third measurement identifier, then the cell corresponding to the cell identifier associated with the third measurement identifier is the applicable cell corresponding to the third measurement identifier/third execution condition.

If the indication information of the third execution condition includes a cell type associated with the third measurement identifier, and this cell type is the first candidate cell (e.g., PCell), then the third measurement identifier is associated with the first candidate cell corresponding to the candidate MCG configuration included in the candidate configuration, and this first candidate cell is the applicable cell corresponding to the third measurement identifier/third execution condition.

If the indication information of the third execution condition includes a cell type associated with the third measurement identifier, and this cell type is the second candidate cell (e.g., PSCell), then the third measurement identifier is associated with the second candidate cell corresponding to the candidate SCG configuration included in the candidate configuration, and this second candidate cell is the applicable cell corresponding to the third measurement identifier/third execution condition.

If the indication information of the third execution condition includes an operation associated with the third measurement identifier, and this operation is triggering CHO, then the third measurement identifier is associated with the first candidate cell corresponding to the candidate MCG configuration included in the candidate configuration, and this first candidate cell is the applicable cell corresponding to the third measurement identifier/third execution condition.

If the indication information of the third execution condition includes an operation associated with the third measurement identifier, and this operation is triggering CPAC, then the third measurement identifier is associated with the second candidate cell corresponding to the candidate SCG configuration included in the candidate configuration, and this second candidate cell is the applicable cell corresponding to the third measurement identifier/third execution condition.

Step 904: the terminal device determines whether the execution condition is satisfied based on the applicable cell.

The terminal device evaluates the third execution condition based on a measurement result of the first candidate cell. Or, the terminal device evaluates the third execution condition based on a measurement result of the second candidate cell.

Or, the terminal device evaluates whether an event corresponding to at least one measurement identifier corresponding to the applicable cell is satisfied based on the applicable cell. For example, the terminal device evaluates whether an associated event/trigger event/entry condition/leaving condition corresponding to at least one third measurement identifier corresponding to the third execution condition is satisfied, based on the measurement result of the first candidate cell. For another example, the terminal device evaluates whether an associated event/trigger event/entry condition/leaving condition corresponding to at least one third measurement identifier corresponding to the third execution condition is satisfied, based on the measurement result of the second candidate cell.

The measurement result of the first candidate cell includes at least one of a Layer 3 measurement result, a Layer 2 measurement result, or a Layer 1 measurement result. The measurement result of the second candidate cell includes at least one of a Layer 3 measurement result, a Layer 2 measurement result, or a Layer 1 measurement result.

In some embodiments, when all associated events corresponding to all measurement identifiers corresponding to the third execution condition are satisfied, it is determined that the third execution condition is satisfied. Or, when some associated events corresponding to all measurement identifiers corresponding to the third execution condition are satisfied, it is determined that the third execution condition is satisfied. Or, when all associated events corresponding to some measurement identifiers corresponding to the third execution condition are satisfied, it is determined that the third execution condition is satisfied. Or, when some associated events corresponding to some measurement identifiers corresponding to the third execution condition are satisfied, it is determined that the third execution condition is satisfied.

Step 905: the network device sends second configuration information to the terminal device.

The second configuration information is used for reconfiguration of the first configuration information, including reconfiguration of all or part of configuration parameters/information, such as at least one of addition, modification, or deletion. For example, the second configuration information is sent carried in an RRC message.

Step 906: the terminal device performs at least one of addition, modification, or deletion on the stored first configuration information based on the second configuration information.

After the terminal device adds, and/or modifies, and/or deletes the stored first configuration information, an updated first configuration information is obtained.

In some embodiments, based on the updated first configuration information, the terminal device executes step 903 and/or step 904 again.

In summary, the method provided in this application, through the configuration information exchanged between the network device and the terminal device, supports the terminal device in determining the candidate cell corresponding to the execution condition and/or the measurement identifier based on the indication information of the measurement identifier. When the configuration information carries indication information of the measurement identifier, it supports determining the applicable cell through the indication information of the measurement identifier, thereby evaluating the execution condition of the mobility management based on the correct applicable cell, thus realizing correct evaluation of the execution condition by the terminal device.

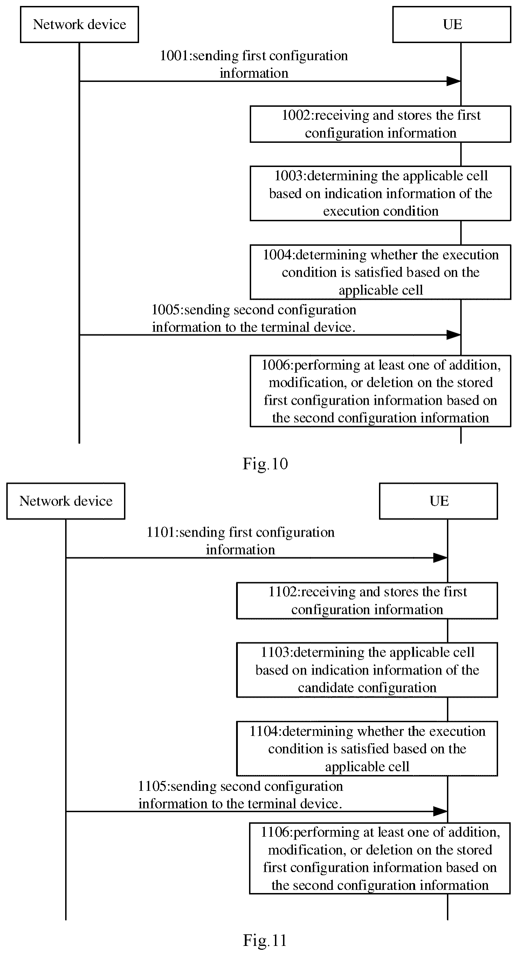

FIG. 10 shows a schematic flowchart of a method for determining an applicable cell provided by some exemplary embodiments of this application. The method is executed by the network device and terminal device shown in FIG. 4. The steps on the network device side can be implemented separately as a network-side applicable cell determination method, and the steps on the terminal device side can be implemented separately as a terminal-side applicable cell determination method. The method includes at least part of the following steps, and does not limit the execution order of the following steps:
Step 1001: the network device sends first configuration information to the terminal device.

The first configuration information is used for condition-triggered mobility management. The first configuration information includes a configuration ID, an execution condition, and a candidate configuration.

Each piece of first configuration information has a unique configuration ID corresponding to it.

The execution condition includes at least one fourth execution condition. Each fourth execution condition is associated with an indication information.

For example, the fourth execution condition includes an execution condition for CHO and/or CPAC. where CPAC includes CPA and/or CPC.

The candidate configuration corresponds to an RRC Reconfiguration (RRCReconfiguration) message. It also can be understood as, the candidate configuration is carried in the RRC Reconfiguration (RRCReconfiguration) message.

The candidate configuration is used to configure a candidate cell and/or a candidate cell group. The candidate cell refers to a candidate cell for mobility management, and the candidate cell group refers to a candidate cell group for mobility management. The candidate configuration includes a candidate MCG configuration and/or a candidate SCG configuration. A candidate cell corresponding to the candidate MCG configuration is a first candidate cell, and a candidate cell corresponding to the candidate SCG configuration is a second candidate cell.

For example, the first candidate cell is a candidate PCell corresponding to the candidate MCG configuration; the second candidate cell is a candidate PSCell corresponding to the candidate SCG configuration.

The cell identifier of the first candidate cell is the PCI or cell index indicated in the serving cell configuration information (e.g., ServingCellConfigCommon) in the synchronization reconfiguration information (e.g., reconfigurationWithSync) in the candidate MCG configuration (e.g., masterCellGroup) in the candidate configuration.

The cell identifier of the second candidate cell is the PCI or cell index indicated in the serving cell configuration information (e.g., ServingCellConfigCommon) in the synchronization reconfiguration information (e.g., reconfigurationWithSync) in the candidate SCG configuration (e.g., secondaryCellGroup) in the candidate configuration.

Step 1002: the terminal device receives and stores the first configuration information.

For example, after receiving the first configuration information, the terminal device stores the first configuration information via the variable VarConditionalReconfig.

Step 1003: the terminal device determines the applicable cell based on indication information of the execution condition.

The terminal device determines the applicable cell corresponding to the fourth execution condition based on indication information of the fourth execution condition.

Each fourth execution condition is associated with an indication information, and each indication information includes at least one of the following:
- a cell identifier associated with the fourth execution condition;
- a cell type associated with the fourth execution condition;
- an operation associated with the fourth execution condition.

The cell identifier includes at least one of a cell index or a PCI.

The cell type associated with the fourth execution condition includes at least one of: the first candidate cell or the second candidate cell. Or, the cell type associated with the fourth execution condition includes at least one of: a PCell or a PSCell.

In some embodiments, the indication information includes the cell type associated with the fourth execution condition, and the indication information includes one or more of:
associated with the first candidate cell, associated with the second candidate cell, not associated with the first candidate cell, not associated with the second candidate cell, associated with a PCell, associated with a PSCell, not associated with a PCell, not associated with a PSCell.

The operation associated with the fourth execution condition includes at least one of: triggering condition-triggered mobility management for MCG, triggering condition-triggered mobility management for SCG, not triggering condition-triggered mobility management for MCG, not triggering condition-triggered mobility management for SCG.

The operation associated with the fourth execution condition, or understood as, the purpose of the fourth execution condition.

In some embodiments, the indication information includes the operation associated with the third measurement identifier or the purpose of the third measurement identifier, including one or more of: for triggering CHO, for triggering CPAC, not for triggering CHO, not for triggering CPAC.

In some embodiments, the indication information is determined by the presence or absence of the indication information. For example, if indication information of the fourth execution condition exists in the first configuration information or in the first configuration information stored by the terminal device, for example, information of "fourth execution condition associated with the first candidate cell" exists, then it is determined that the indication information of the fourth execution condition includes "fourth execution condition associated with the first candidate cell". For another example, if information of "fourth execution condition not used for triggering CPAC" exists in the first configuration information or in the first configuration information stored by the terminal device, then it is determined that the indication information of the fourth execution condition includes "fourth execution condition not used for triggering CPAC".

In some embodiments, the indication information is determined by the value of the indication information. For example, if the value corresponding to the cell type associated with the fourth execution condition in the first configuration information or in the first configuration information stored by the terminal device is a first value (e.g., "1"), then it is determined that the indication information of the fourth execution condition includes "fourth execution condition associated with the first candidate cell". For another example, if the value corresponding to the cell type associated with the fourth execution condition in the first configuration information or in the first configuration information stored by the terminal device is a second value (e.g., "0"), then it is determined that the indication information of the fourth execution condition includes "fourth execution condition not associated with the first candidate cell". For another example, if the value corresponding to the cell type associated with the fourth execution condition in the first configuration information or in the first configuration information stored by the terminal device is a third value (e.g., "2"), then it is determined that the indication information of the fourth execution condition includes "fourth execution condition associated with the second candidate cell". For another example, if the value corresponding to the cell type associated with the fourth execution condition in the first configuration information or in the first configuration information stored by the terminal device is a fourth value (e.g., "3"), then it is determined that the indication information of the fourth execution condition includes "fourth execution condition not associated with the second candidate cell".

If the indication information of the fourth execution condition includes a cell identifier associated with the fourth execution condition, then the cell corresponding to the cell identifier associated with the fourth execution condition is the applicable cell corresponding to the fourth execution condition.

If the indication information of the fourth execution condition includes a cell type associated with the fourth execution condition, and this cell type is the first candidate cell (e.g., PCell), then the fourth execution condition is associated with the first candidate cell corresponding to the candidate MCG configuration included in the candidate configuration, and this first candidate cell is the applicable cell corresponding to the fourth execution condition.

If the indication information of the fourth execution condition includes a cell type associated with the fourth execution condition, and this cell type is the second candidate cell (e.g., PSCell), then the fourth execution condition is associated with the second candidate cell corresponding to the candidate SCG configuration included in the candidate configuration, and this second candidate cell is the applicable cell corresponding to the fourth execution condition.

If the indication information of the fourth execution condition includes an operation associated with the fourth execution condition, and this operation is triggering CHO, then the fourth execution condition is associated with the first candidate cell corresponding to the candidate MCG configuration included in the candidate configuration, and this first candidate cell is the applicable cell corresponding to the fourth execution condition.

If the indication information of the fourth execution condition includes an operation associated with the fourth execution condition, and this operation is triggering CPAC, then the fourth execution condition is associated with the second candidate cell corresponding to the candidate SCG configuration included in the candidate configuration, and this second candidate cell is the applicable cell corresponding to the fourth execution condition.

Step 1004: the terminal device determines whether the execution condition is satisfied based on the applicable cell.

The terminal device evaluates the fourth execution condition based on a measurement result of the first candidate cell. Or, the terminal device evaluates the fourth execution condition based on a measurement result of the second candidate cell.

The measurement result of the first candidate cell includes at least one of a Layer 3 measurement result, a Layer 2 measurement result, or a Layer 1 measurement result. The measurement result of the second candidate cell includes at least one of a Layer 3 measurement result, a Layer 2 measurement result, or a Layer 1 measurement result.

When all associated events corresponding to the fourth execution condition are satisfied, it is determined that the fourth execution condition is satisfied. Or, when some associated events corresponding to the fourth execution condition are satisfied, it is determined that the fourth execution condition is satisfied.

Step 1005: the network device sends second configuration information to the terminal device.

The second configuration information is used for reconfiguration of the first configuration information, including reconfiguration of all or part of configuration parameters/information, such as at least one of addition, modification, or deletion. For example, the second configuration information is sent carried in an RRC message.

Step 1006: the terminal device performs at least one of addition, modification, or deletion on the stored first configuration information based on the second configuration information.

After the terminal device adds, and/or modifies, and/or deletes the stored first configuration information, an updated first configuration information is obtained.

In some embodiments, based on the updated first configuration information, the terminal device executes step 1003 and/or step 1004 again.

In summary, the method provided in this application, through the configuration information exchanged between the network device and the terminal device, supports the terminal device in determining the candidate cell corresponding to the execution condition based on the indication information of the execution condition. When the configuration information carries indication information of the execution condition, it supports determining the applicable cell through the indication information of the execution condition, thereby evaluating the execution condition of the mobility management based on the correct applicable cell, thus realizing correct evaluation of the execution condition by the terminal device.

FIG. 11 shows a schematic flowchart of a method for determining an applicable cell provided by some exemplary embodiments of this application. The method is executed by the network device and terminal device shown in FIG. 4. The steps on the network device side can be implemented separately as a network-side applicable cell determination method, and the steps on the terminal device side can be implemented separately as a terminal-side applicable cell determination method. The method includes at least part of the following steps, and does not limit the execution order of the following steps:
Step 1101: the network device sends first configuration information to the terminal device.

The first configuration information is used for condition-triggered mobility management. The first configuration information includes a configuration ID, an execution condition, and a candidate configuration.

Each piece of first configuration information has a unique configuration ID corresponding to it.

The candidate configuration corresponds to an RRC Reconfiguration (RRCReconfiguration) message. It also can be understood as, the candidate configuration is carried in the RRC Reconfiguration (RRCReconfiguration) message.

The candidate configuration is used to configure a candidate cell and/or a candidate cell group. The candidate cell refers to a candidate cell for mobility management, and the candidate cell group refers to a candidate cell group for mobility management. The candidate configuration includes a candidate MCG configuration and/or a candidate SCG configuration. A candidate cell corresponding to the candidate MCG configuration is a first candidate cell, and a candidate cell corresponding to the candidate SCG configuration is a second candidate cell.

For example, the first candidate cell is a candidate PCell corresponding to the candidate MCG configuration; the second candidate cell is a candidate PSCell corresponding to the candidate SCG configuration.

The cell identifier of the first candidate cell is the PCI or cell index indicated in the serving cell configuration information (e.g., ServingCellConfigCommon) in the synchronization reconfiguration information (e.g., reconfiguration WithSync) in the candidate MCG configuration (e.g., masterCellGroup) in the candidate configuration.

The cell identifier of the second candidate cell is the PCI or cell index indicated in the serving cell configuration information (e.g., ServingCellConfigCommon) in the synchronization reconfiguration information (e.g., reconfigurationWithSync) in the candidate SCG configuration (e.g., secondaryCellGroup) in the candidate configuration.

Step 1102: the terminal device receives and stores the first configuration information.

For example, after receiving the first configuration information, the terminal device stores the first configuration information via the variable VarConditionalReconfig.

Step 1103: the terminal device determines the applicable cell based on indication information of the candidate configuration.

The candidate MCG configuration includes first indication information, used to indicate an execution condition associated with the candidate MCG and/or a measurement identifier associated with the candidate MCG.

The candidate SCG configuration includes second indication information, used to indicate an execution condition associated with the candidate SCG and/or a measurement identifier associated with the candidate SCG.

For the execution condition and/or measurement identifier indicated in the candidate MCG configuration, it is associated with the first candidate cell corresponding to the candidate MCG configuration. That is to say, the applicable cell corresponding to the execution condition and/or measurement identifier indicated in the candidate MCG configuration is the first candidate cell corresponding to the candidate MCG configuration.

For the execution condition and/or measurement identifier indicated in the candidate SCG configuration, it is associated with the second candidate cell corresponding to the candidate SCG configuration. That is to say, the applicable cell corresponding to the execution condition and/or measurement identifier indicated in the candidate SCG configuration is the second candidate cell corresponding to the candidate SCG configuration.

Step 1104: the terminal device determines whether the execution condition is satisfied based on the applicable cell.

The terminal device evaluates the execution condition indicated in the candidate MCG configuration based on a measurement result of the first candidate cell. Or, the terminal device evaluates the execution condition indicated in the candidate SCG configuration based on a measurement result of the second candidate cell.

The measurement result of the first candidate cell includes at least one of a Layer 3 measurement result, a Layer 2 measurement result, or a Layer 1 measurement result. The measurement result of the second candidate cell includes at least one of a Layer 3 measurement result, a Layer 2 measurement result, or a Layer 1 measurement result.

When all associated events corresponding to the execution condition indicated in the candidate MCG configuration are satisfied, it is determined that the execution condition indicated in the candidate MCG configuration is satisfied. Or, when some associated events corresponding to the execution condition indicated in the candidate MCG configuration are satisfied, it is determined that the execution condition indicated in the candidate MCG configuration is satisfied.

When all associated events corresponding to the execution condition indicated in the candidate SCG configuration are satisfied, it is determined that the execution condition indicated in the candidate SCG configuration is satisfied. Or, when some associated events corresponding to the execution condition indicated in the candidate SCG configuration are satisfied, it is determined that the execution condition indicated in the candidate SCG configuration is satisfied.

Step 1105: the network device sends second configuration information to the terminal device.

The second configuration information is used for reconfiguration of the first configuration information, including reconfiguration of all or part of configuration parameters/information, such as at least one of addition, modification, or deletion. For example, the second configuration information is sent carried in an RRC message.

Step 1106: the terminal device performs at least one of addition, modification, or deletion on the stored first configuration information based on the second configuration information.

After the terminal device adds, and/or modifies, and/or deletes the stored first configuration information, an updated first configuration information is obtained.

In some embodiments, based on the updated first configuration information, the terminal device executes step 1103 and/or step 1104 again.

In summary, the method provided in this application, through the configuration information exchanged between the network device and the terminal device, supports the terminal device in determining the candidate cell corresponding to the execution condition based on the indication information of the candidate configuration. When the configuration information carries the candidate configuration, it supports determining the applicable cell through the indication information of the candidate configuration, thereby evaluating the execution condition of the mobility management based on the correct applicable cell, thus realizing correct evaluation of the execution condition by the terminal device.

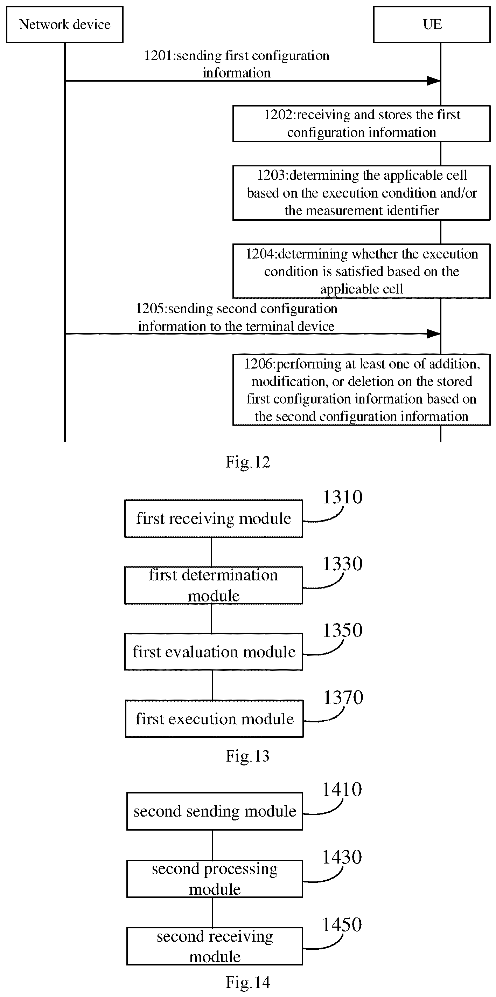

FIG. 12 shows a schematic flowchart of a method for determining an applicable cell provided by some exemplary embodiments of this application. The method is executed by the network device and terminal device shown in FIG. 4. The steps on the network device side can be implemented separately as a network-side applicable cell determination method, and the steps on the terminal device side can be implemented separately as a terminal-side applicable cell determination method. The method includes at least part of the following steps, and does not limit the execution order of the following steps:
Step 1201: the network device sends first configuration information to the terminal device.

The first configuration information is used for condition-triggered mobility management. The first configuration information includes a configuration ID, an execution condition, and a candidate configuration.

Each piece of first configuration information has a unique configuration ID corresponding to it.

The execution condition includes condExecutionCondSCG and/or condExecutionCond.

The candidate configuration corresponds to an RRC Reconfiguration (RRCReconfiguration) message. It also can be understood as, the candidate configuration is carried in the RRC Reconfiguration (RRCReconfiguration) message.

The candidate configuration is used to configure a candidate cell and/or a candidate cell group. The candidate cell refers to a candidate cell for mobility management, and the candidate cell group refers to a candidate cell group for mobility management. The candidate configuration includes a candidate MCG configuration and/or a candidate SCG configuration. A candidate cell corresponding to the candidate MCG configuration is a first candidate cell, and a candidate cell corresponding to the candidate SCG configuration is a second candidate cell.

For example, the first candidate cell is a candidate PCell corresponding to the candidate MCG configuration; the second candidate cell is a candidate PSCell corresponding to the candidate SCG configuration.

The cell identifier of the first candidate cell is the PCI or cell index indicated in the serving cell configuration information (e.g., ServingCellConfigCommon) in the synchronization reconfiguration information (e.g., reconfigurationWithSync) in the candidate MCG configuration (e.g., masterCellGroup) in the candidate configuration.

The cell identifier of the second candidate cell is the PCI or cell index indicated in the serving cell configuration information (e.g., ServingCellConfigCommon) in the synchronization reconfiguration information (e.g., reconfigurationWithSync) in the candidate SCG configuration (e.g., secondaryCellGroup) in the candidate configuration.

Step 1202: the terminal device receives and stores the first configuration information.

For example, after receiving the first configuration information, the terminal device stores the first configuration information via the variable VarConditionalReconfig.

Step 1203: the terminal device determines the applicable cell based on the execution condition and/or the measurement identifier.

If the first configuration information includes condExecutionCondSCG, then the applicable cell corresponding to condExecutionCondSCG and the measurement identifier indicated in condExecutionCondSCG is the second candidate cell corresponding to the candidate SCG configuration.

If the first configuration information includes condExecutionCond, and condExecutionCond is configured through a first configuration manner, then the applicable cell corresponding to condExecutionCond and the measurement identifier indicated in condExecutionCond is the second candidate cell corresponding to the candidate SCG configuration.

where the first configuration manner includes: configured by a Secondary Node (SN) and sent to the terminal device by the SN; or configured by an SN and sent to the terminal device by a Master Node (MN).

For example, the first configuration manner includes at least one of the following:
- configured via SRB3;
- configured via nr-SCG, that is, the first configuration information is configured by the source SN and transparently transmitted/forwarded to the terminal device by the MN;
- configured via nr-SecondaryCellGroupConfig, that is, the first configuration information is configured by the source SN and transparently transmitted/forwarded to the terminal device by the MN.

If the first configuration information includes condExecutionCond, but condExecutionCond is not configured through the first configuration manner, then, in a case where the event associated with the measurement identifier indicated by condExecutionCond includes a first trigger event, it is determined that condExecutionCond and the measurement identifier indicated in condExecutionCond are associated with the candidate cell corresponding to the candidate MCG configuration, that is to say, the applicable cell corresponding to condExecutionCond and the measurement identifier indicated in condExecutionCond is the first candidate cell corresponding to the candidate MCG configuration.

If the first configuration information includes condExecutionCond, but condExecutionCond is not configured through the first configuration manner, then, in a case where the event associated with the measurement identifier indicated by condExecutionCond includes a second trigger event, it is determined that condExecutionCond and the measurement identifier indicated in condExecutionCond are associated with the candidate cell corresponding to the candidate SCG configuration, that is to say, the applicable cell corresponding to condExecutionCond and the measurement identifier indicated in condExecutionCond is the second candidate cell corresponding to the candidate SCG configuration.

The first trigger event includes an event for triggering condition-triggered mobility management for MCG, and the second trigger event includes an event for triggering condition-triggered mobility management for SCG.

In some embodiments, the first trigger event includes a conditional event A3 and/or a conditional event A5; the second trigger event includes: a conditional event A4.

Step 1204: the terminal device determines whether the execution condition is satisfied based on the applicable cell.

The terminal device evaluates condExecutionCond based on a measurement result of the first candidate cell or the second candidate cell. And/or, the terminal device evaluates condExecutionCondSCG based on a measurement result of the second candidate cell.

The measurement result of the first candidate cell includes at least one of a Layer 3 measurement result, a Layer 2 measurement result, or a Layer 1 measurement result. The measurement result of the second candidate cell includes at least one of a Layer 3 measurement result, a Layer 2 measurement result, or a Layer 1 measurement result.

In a case where the first configuration information includes condExecutionCond, when all associated events corresponding to the measurement identifier indicated by condExecutionCond are satisfied, it is determined that condExecutionCond is satisfied. Or, when some associated events corresponding to the measurement identifier indicated by condExecutionCond are satisfied, it is determined that condExecutionCond is satisfied.

In a case where the first configuration information includes condExecutionCondSCG, when all associated events corresponding to the measurement identifier indicated by condExecutionCondSCG are satisfied, it is determined that condExecutionCondSCG is satisfied. Or, when some associated events corresponding to the measurement identifier indicated by condExecutionCondSCG are satisfied, it is determined that condExecutionCondSCG is satisfied.

In a case where the first configuration information includes both condExecutionCond and condExecutionCondSCG, when all associated events corresponding to the measurement identifiers indicated by condExecutionCond and condExecutionCondSCG are satisfied, it is determined that the execution condition of the mobility management is satisfied, triggering the execution of the condition-triggered mobility management. Or, when some associated events corresponding to the measurement identifiers indicated by condExecutionCond and condExecutionCondSCG are satisfied, it is determined that the execution condition of the mobility management is satisfied, triggering the execution of the condition-triggered mobility management.

Step 1205: the network device sends second configuration information to the terminal device.

The second configuration information is used for reconfiguration of the first configuration information, including reconfiguration of all or part of configuration parameters/information, such as at least one of addition, modification, or deletion. For example, the second configuration information is sent carried in an RRC message.

Step 1206: the terminal device performs at least one of addition, modification, or deletion on the stored first configuration information based on the second configuration information.

After the terminal device adds, and/or modifies, and/or deletes the stored first configuration information, an updated first configuration information is obtained.

In some embodiments, based on the updated first configuration information, the terminal device executes step 1203 and/or step 1204 again.

In summary, the method provided in this application, through the configuration information exchanged between the network device and the terminal device, supports the terminal device in determining the candidate cell corresponding to the execution condition/measurement identifier based on the configuration manner of the configuration information or the event associated with the measurement identifier. It supports determining the applicable cell through the configuration information, thereby evaluating the execution condition of the mobility management based on the correct applicable cell, thus realizing correct evaluation of the execution condition by the terminal device.

It should be understood that the above various embodiments can be used alone or freely combined. For example, the embodiment shown in FIG. 8 can be used in combination with any one or more of the embodiments shown in FIGS. 9, 10, 11, and 12; the embodiment shown in FIG. 9 can be used in combination with any one or more of the embodiments shown in FIGS. 8, 10, 11, and 12; the embodiment shown in FIG. 10 can be used in combination with any one or more of the embodiments shown in FIGS. 9, 8, 11, and 12; the embodiment shown in FIG. 11 can be used in combination with any one or more of the embodiments shown in FIGS. 9, 10, 8, and 12; the embodiment shown in FIG. 12 can be used in combination with any one or more of the embodiments shown in FIGS. 9, 10, 11, and 8.

FIG. 13 shows a structural block diagram of an apparatus for determining an applicable cell provided by some exemplary embodiments of this application. The apparatus includes at least part of the following modules: a first receiving module 1310, a first determination module 1330, a first evaluation module 1350, and a first execution module 1370.

The first receiving module 1310 is configured to receive configuration information, where the configuration information is used for condition-triggered mobility management.

The first determination module 1330 is configured to determine an applicable cell corresponding to an execution condition of the mobility management.

In some embodiments, the condition-triggered mobility management includes:
condition-triggered mobility management for a Master Cell Group (MCG); and/or condition-triggered mobility management for a Secondary Cell Group (SCG).

In some embodiments, the configuration information includes the execution condition;

The first determination module 1330 is configured to determine the applicable cell corresponding to the execution condition based on a type of the execution condition.

In some embodiments, the execution condition includes a first execution condition and/or a second execution condition;
The first execution condition includes an execution condition for condition-triggered mobility management for MCG, and the second execution condition includes an execution condition for condition-triggered mobility management for SCG.

In some embodiments, the configuration information further includes a candidate configuration;
The first determination module 1330 is configured to, in a case where the type of the execution condition includes the first execution condition, determine the applicable cell corresponding to the first execution condition as a first candidate cell corresponding to the candidate configuration; and/or
in a case where the type of the execution condition includes the second execution condition, determine the applicable cell corresponding to the second execution condition as a second candidate cell corresponding to the candidate configuration.

In some embodiments, the configuration information further includes a candidate configuration, the first execution condition corresponds to at least one first measurement identifier, and the second execution condition corresponds to at least one second measurement identifier;
The first determination module 1330 is configured to, in a case where the type of the execution condition includes the first execution condition, determine the applicable cell corresponding to the first measurement identifier as the first candidate cell corresponding to the candidate configuration; and/or
in a case where the type of the execution condition includes the second execution condition, determine the applicable cell corresponding to the second measurement identifier as the second candidate cell corresponding to the candidate configuration.

In some embodiments, the configuration information includes the execution condition;
The first determination module 1330 is configured to determine the applicable cell corresponding to the execution condition based on indication information of the execution condition.

In some embodiments, the execution condition includes a third execution condition;
The third execution condition includes an execution condition for condition-triggered mobility management for MCG and an execution condition for condition-triggered mobility management for SCG.

In some embodiments, indication information of the third execution condition includes at least one of the following:
at least one third measurement identifier;
a cell identifier associated with the third measurement identifier;
a cell type associated with the third measurement identifier;
an operation associated with the third measurement identifier.

In some embodiments, the third execution condition includes at least one entry, and indication information of each entry includes at least one of the following:
at least one third measurement identifier;
a cell identifier associated with the third measurement identifier;
a cell type associated with the third measurement identifier;
an operation associated with the third measurement identifier.

In some embodiments, the indication information includes a cell identifier associated with the third measurement identifier;
The first determination module 1330 is configured to determine the applicable cell corresponding to the third execution condition and/or the third measurement identifier based on the cell identifier associated with the third measurement identifier.

In some embodiments, the first determination module 1330 is configured to determine a cell corresponding to the cell identifier associated with the third measurement identifier as the applicable cell corresponding to the third execution condition and/or the third measurement identifier.

In some embodiments, the indication information includes a cell type associated with the third measurement identifier;
The first determination module 1330 is configured to determine the applicable cell corresponding to the third execution condition and/or the third measurement identifier based on the cell type associated with the third measurement identifier.

In some embodiments, the configuration information further includes a candidate configuration, the candidate configuration corresponds to a first candidate cell and/or a second candidate cell;
The first determination module 1330 is configured to perform at least one of the following:
In a case where the cell type associated with the third measurement identifier includes the first candidate cell, determine the first candidate cell as the applicable cell corresponding to the third execution condition and/or the third measurement identifier;
In a case where the cell type associated with the third measurement identifier includes the second candidate cell, determine the second candidate cell as the applicable cell corresponding to the third execution condition and/or the third measurement identifier.

In some embodiments, the indication information includes an operation associated with the third measurement identifier;
The first determination module 1330 is configured to determine the applicable cell corresponding to the third execution condition and/or the third measurement identifier based on the operation associated with the third measurement identifier.

In some embodiments, the configuration information further includes a candidate configuration, the candidate configuration corresponds to a first candidate cell and/or a second candidate cell;
The first determination module 1330 is configured to perform at least one of the following:
In a case where the operation associated with the third measurement identifier includes triggering condition-triggered mobility management for MCG, determine the first candidate cell as the applicable cell corresponding to the third execution condition and/or the third measurement identifier;
In a case where the operation associated with the third measurement identifier includes triggering condition-triggered mobility management for SCG, determine the second candidate cell as the applicable cell corresponding to the third execution condition and/or the third measurement identifier.

In some embodiments, the execution condition includes at least one fourth execution condition, and the fourth execution condition includes an execution condition for condition-triggered mobility management for MCG and/or an execution condition for condition-triggered mobility management for SCG.

In some embodiments, indication information of the fourth execution condition includes at least one of the following:
a cell identifier associated with the fourth execution condition;
a cell type associated with the fourth execution condition;
an operation associated with the fourth execution condition.

In some embodiments, the indication information includes a cell identifier associated with the fourth execution condition;
The first determination module 1330 is configured to determine the applicable cell corresponding to the fourth execution condition based on the cell identifier associated with the fourth execution condition.

In some embodiments, the first determination module 1330 is configured to determine a cell corresponding to the cell identifier associated with the fourth execution condition as the applicable cell corresponding to the fourth execution condition.

In some embodiments, the indication information includes a cell type associated with the fourth execution condition;
The first determination module 1330 is configured to determine the applicable cell corresponding to the fourth execution condition based on the cell type associated with the fourth execution condition.

In some embodiments, the configuration information further includes a candidate configuration, the candidate configuration corresponds to a first candidate cell and/or a second candidate cell;
The first determination module 1330 is configured to perform at least one of the following:
In a case where the cell type associated with the fourth execution condition includes the first candidate cell, determine the first candidate cell as the applicable cell corresponding to the fourth execution condition;
In a case where the cell type associated with the fourth execution condition includes the second candidate cell, determine the second candidate cell as the applicable cell corresponding to the fourth execution condition.

In some embodiments, the indication information includes an operation associated with the fourth execution condition;
The first determination module 1330 is configured to determine the applicable cell corresponding to the fourth execution condition based on the operation associated with the fourth execution condition.

In some embodiments, the configuration information further includes a candidate configuration, the candidate configuration corresponds to a first candidate cell and/or a second candidate cell;
The first determination module 1330 is configured to perform at least one of the following:
In a case where the operation associated with the fourth execution condition includes triggering condition-triggered mobility management for MCG, determine the first candidate cell as the applicable cell corresponding to the fourth execution condition;
In a case where the operation associated with the fourth execution condition includes triggering condition-triggered mobility management for SCG, determine the second candidate cell as the applicable cell corresponding to the fourth execution condition.

In some embodiments, the configuration information includes a candidate configuration; the first determination module 1330 is configured to determine the applicable cell corresponding to the execution condition based on indication information of the candidate configuration.

In some embodiments, the candidate configuration includes a candidate MCG configuration and/or a candidate SCG configuration;
Indication information of the candidate configuration includes at least one of the following:
an execution condition indicated by the candidate MCG configuration;
an execution condition indicated by the candidate SCG configuration;
a measurement identifier indicated by the candidate MCG configuration;
a measurement identifier indicated by the candidate SCG configuration.

In some embodiments, the first determination module 1330 is configured to perform at least one of the following:
determine the applicable cell corresponding to the execution condition indicated by the candidate MCG configuration as a first candidate cell;
determine the applicable cell corresponding to the measurement identifier indicated by the candidate MCG configuration as the first candidate cell;
determine the applicable cell corresponding to the execution condition indicated by the candidate SCG configuration as a second candidate cell;
determine the applicable cell corresponding to the measurement identifier indicated by the candidate SCG configuration as the second candidate cell.

In some embodiments, the first determination module 1330 is configured to determine the applicable cell corresponding to the execution condition based on the configuration information.

In some embodiments, the configuration information further includes a candidate configuration;
The first determination module 1330 is configured to, in a case where the configuration information includes a fifth execution condition, determine the applicable cell corresponding to the fifth execution condition and/or the applicable cell corresponding to a measurement identifier corresponding to the fifth execution condition as a second candidate cell corresponding to the candidate configuration;

The fifth execution condition is used for condition-triggered mobility management for SCG.

In some embodiments, the first determination module 1330 is configured to determine the applicable cell corresponding to the execution condition based on a configuration manner of the configuration information.

In some embodiments, the configuration information further includes a candidate configuration; the first determination module 1330 is configured to, in a case where the configuration information includes a sixth execution condition, and the configuration manner of the configuration information is a first configuration manner, determine the applicable cell corresponding to the sixth execution condition and/or the applicable cell corresponding to a measurement identifier corresponding to the sixth execution condition as a second candidate cell corresponding to the candidate configuration;
The sixth execution condition is used for condition-triggered mobility management for MCG and/or for condition-triggered mobility management for SCG.

In some embodiments, the first configuration manner includes: configured by a Secondary Node (SN) and sent to the terminal device by the SN; or configured by an SN and sent to the terminal device by a Master Node (MN).

In some embodiments, the first configuration manner includes at least one of the following:
configured via SRB3;
configured via nr-SCG;
configured via nr-SecondaryCellGroupConfig.

In some embodiments, the first determination module 1330 is configured to determine the applicable cell corresponding to the execution condition based on an associated event corresponding to the execution condition included in the configuration information.

In some embodiments, the configuration information further includes a candidate configuration;
The first determination module 1330 is configured to, in a case where the associated event corresponding to the execution condition included in the configuration information includes a first trigger event, determine the applicable cell corresponding to the sixth execution condition and/or the applicable cell corresponding to a measurement identifier corresponding to the sixth execution condition as a first candidate cell corresponding to the candidate configuration;
in a case where the associated event corresponding to the execution condition included in the configuration information includes a second trigger event, determine the applicable cell corresponding to the sixth execution condition and/or the applicable cell corresponding to a measurement identifier corresponding to the sixth execution condition as a second candidate cell corresponding to the candidate configuration.

In some embodiments, the first trigger event includes an event for triggering condition-triggered mobility management for MCG; and/or
the second trigger event includes an event for triggering condition-triggered mobility management for SCG.

In some embodiments, the first trigger event includes at least one of a conditional event A3 or a conditional event A5;
the second trigger event includes a conditional event A4.

In some embodiments, in a case where the candidate configuration includes the candidate MCG configuration, the first candidate cell is a candidate PCell corresponding to the candidate MCG configuration; and/or
in a case where the candidate configuration includes the candidate SCG configuration, the second candidate cell is a candidate PSCell corresponding to the candidate SCG configuration.

In some embodiments, the first candidate cell is determined based on a PCI (Physical Cell Identity) and/or a cell index indicated by serving cell configuration information in synchronization reconfiguration information included in the candidate MCG configuration.

In some embodiments, the second candidate cell is determined based on a PCI and/or a cell index indicated by serving cell configuration information in synchronization reconfiguration information included in the candidate SCG configuration.

In some embodiments, the execution condition for condition-triggered mobility management for MCG includes an execution condition for CHO (Conditional Handover);
the execution condition for condition-triggered mobility management for SCG includes an execution condition for CPAC (Conditional Primary Secondary Cell Addition/Change).

In some embodiments, the apparatus further includes a first evaluation module 1350, configured to determine whether the execution condition is satisfied based on the applicable cell corresponding to the execution condition.

In some embodiments, the first evaluation module 1350 is configured to determine whether the execution condition is satisfied based on a measurement result of the applicable cell.

In some embodiments, the first evaluation module 1350 is configured to determine whether an associated event of the execution condition is satisfied based on the measurement result of the applicable cell;
and/or determine whether an associated event of a measurement identifier corresponding to the execution condition is satisfied based on the measurement result of the applicable cell.

In some embodiments, the first evaluation module 1350 is configured to determine whether an entry condition and/or a leaving condition of the associated event of the execution condition is satisfied.

In some embodiments, the first evaluation module 1350 is configured to determine whether an entry condition and/or a leaving condition of the associated event of the measurement identifier corresponding to the execution condition is satisfied.

In some embodiments, the measurement result includes at least one of a Layer 3 measurement result, a Layer 2 measurement result, or a Layer 1 measurement result.

In some embodiments, the apparatus further includes a first execution module 1370, configured to execute the condition-triggered mobility management in a case where the execution condition is satisfied.

In summary, the apparatus provided in this application supports, after receiving configuration information for condition-triggered mobility management, determining the applicable cell corresponding to the execution condition of the mobility management, thereby supporting evaluating the execution condition of the mobility management based on the correct applicable cell, thus realizing correct evaluation of the execution condition. Moreover, when receiving different configuration information, this apparatus can determine the applicable cell through an appropriate method in different scenarios, improving the robustness of condition-triggered mobility, and improving the flexibility and accuracy of determining the applicable cell and evaluating the execution condition.

FIG. 14 shows a structural block diagram of an apparatus for determining an applicable cell provided by some exemplary embodiments of this application. The apparatus includes at least part of the following modules: a second sending module 1410, a second processing module 1430, and a second receiving module 1450.

The second sending module 1410 is configured to send configuration information, where the configuration information is used for condition-triggered mobility management, and the configuration information is used for a terminal device to determine an applicable cell corresponding to an execution condition of the mobility management.

In some embodiments, the condition-triggered mobility management includes at least one of the following:
condition-triggered mobility management for a Master Cell Group (MCG);
and/or condition-triggered mobility management for a Secondary Cell Group (SCG).

In some embodiments, the configuration information includes the execution condition;

The configuration information is used for the terminal device to determine the applicable cell corresponding to the execution condition based on a type of the execution condition.

In some embodiments, the execution condition includes a first execution condition and/or a second execution condition;
The first execution condition includes an execution condition for condition-triggered mobility management for MCG, and the second execution condition includes an execution condition for condition-triggered mobility management for SCG.

In some embodiments, the configuration information includes the execution condition;
The configuration information is used for the terminal device to determine the applicable cell corresponding to the execution condition based on indication information of the execution condition.

In some embodiments, the execution condition includes a third execution condition;
The third execution condition includes an execution condition for condition-triggered mobility management for MCG and an execution condition for condition-triggered mobility management for SCG.

In some embodiments, the execution condition includes at least one fourth execution condition, and the fourth execution condition includes an execution condition for condition-triggered mobility management for MCG and/or an execution condition for condition-triggered mobility management for SCG.

In some embodiments, the configuration information includes a candidate configuration;
The configuration information is used for the terminal device to determine the applicable cell corresponding to the execution condition based on indication information of the candidate configuration.

In some embodiments, the candidate configuration includes a candidate MCG configuration and/or a candidate SCG configuration;
Indication information of the candidate configuration includes at least one of the following:
an execution condition indicated by the candidate MCG configuration;
an execution condition indicated by the candidate SCG configuration;
a measurement identifier indicated by the candidate MCG configuration;
a measurement identifier indicated by the candidate SCG configuration.

In some embodiments, the configuration information is used for the terminal device to determine the applicable cell corresponding to the execution condition based on the configuration information.

In some embodiments, the configuration information is used for the terminal device to determine the applicable cell corresponding to the execution condition based on a configuration manner of the configuration information.

In some embodiments, the configuration information is used for the terminal device to determine the applicable cell corresponding to the execution condition based on an associated event corresponding to the execution condition included in the configuration information.

In some embodiments, the execution condition for condition-triggered mobility management for MCG includes an execution condition for CHO (Conditional Handover);
the execution condition for condition-triggered mobility management for SCG includes an execution condition for CPAC (Conditional Primary Secondary Cell Addition/Change).

In some embodiments, the apparatus further includes a second processing module 1430, configured to generate/determine the configuration information.

In some embodiments, the apparatus further includes a second receiving module 1450, configured to receive the configuration information.

In some embodiments, the second receiving module 1450 receives the configuration information sent by an SN, or source information for generating the configuration information.

In summary, the apparatus provided in this application supports sending configuration information for condition-triggered mobility management to a terminal device, supporting the terminal device to determine the applicable cell corresponding to the execution condition of the mobility management based on the configuration information, thereby supporting the terminal device to evaluate the execution condition of the mobility management based on the correct applicable cell, thus realizing correct evaluation of the execution condition by the terminal device.

It should be noted that: for the apparatus in the above embodiment, the division of the above functional modules is only used as an example. In practical applications, the above functions may be assigned to be completed by different functional modules as needed, that is, the internal structure of the device is divided into different functional modules to complete all or part of the functions described above.

Regarding the apparatus in this embodiment, the specific manner in which each module performs operations has been described in detail in the embodiments related to the method, and will not be elaborated here.

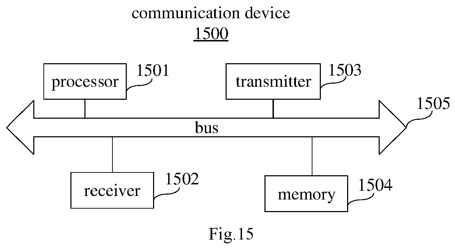

FIG. 15 shows a structural diagram of a communication device (terminal device or MN or SN) provided by some exemplary embodiments of this application. The communication device 1500 includes: a processor 1501, a receiver 1502, a transmitter 1503, a memory 1504, and a bus 1505.

The processor 1501 includes one or more processing cores. The processor 1501 runs software programs and modules to execute various functional applications and information processing. In some embodiments, the processor 1501 may be used to implement the functions and steps of the first determination module 1330 and/or the first evaluation module 1350 and/or the first execution module 1370 and/or the second processing module 1430 described above.

The receiver 1502 and the transmitter 1503 may be implemented as one communication component, which may be a communication chip. In some embodiments, the receiver 1502 may be used to implement the functions and steps of the first receiving module 1310 and/or the second receiving module 1450 described above. In some embodiments, the transmitter 1503 may be used to implement the functions and steps of the second sending module 1410 described above.

The memory 1504 is connected to the processor 1501 via the bus 1505. The memory 1504 may be used to store at least one instruction, and the processor 1501 is configured to execute the at least one instruction to implement the various steps in the method embodiments described above.

Furthermore, the memory 1504 may be implemented by any type of volatile or non-volatile storage device or a combination thereof. Volatile or non-volatile storage devices include, but are not limited to: magnetic disks or optical disks, Electrically Erasable Programmable Read-Only Memory (EEPROM), Erasable Programmable Read-Only Memory (EPROM), Static Random-Access Memory (SRAM), Read-Only Memory (ROM), magnetic memory, flash memory, Programmable Read-Only Memory (PROM).

In some embodiments, the receiver 1502 independently performs signal/data reception, or the processor 1501 controls the receiver 1502 to perform signal/data reception, or the processor 1501 requests the receiver 1502 to perform signal/data reception, or the processor 1501 cooperates with the receiver 1502 to perform signal/data reception.

In some embodiments, the transmitter 1503 independently performs signal/data transmission, or the processor 1501 controls the transmitter 1503 to perform signal/data transmission, or the processor 1501 requests the transmitter 1503 to perform signal/data transmission, or the processor 1501 cooperates with the transmitter 1503 to perform signal/data transmission.

In an exemplary embodiment of this application, a computer-readable storage medium is also provided. The computer-readable storage medium stores at least one program therein. The at least one program is loaded and executed by a processor, causing the computer-readable storage medium to implement the method for determining an applicable cell provided by the various method embodiments described above.

In an exemplary embodiment of this application, a chip is also provided. The chip includes a programmable logic circuit and/or program instructions. When the chip runs on a communication device, it is used to implement the method for determining an applicable cell provided by the various method embodiments described above.

In an exemplary embodiment of this application, a computer program product is also provided. When the computer program product runs on a processor of a communication device, it causes the communication device to execute the above method for determining an applicable cell.

In an exemplary embodiment of this application, a computer program is also provided. The computer program includes computer instructions. A processor of a communication device executes the computer instructions, causing the communication device to execute the above method for determining an applicable cell.

Those skilled in the art should realize that in the above one or more examples, the functions described in the embodiments of this application may be implemented in hardware, software, firmware, or any combination thereof. When implemented in software, these functions may be stored in a computer-readable medium or transmitted as one or more instructions or code on a computer-readable medium. Computer-readable media includes computer storage media and communication media, where communication media includes any medium that facilitates transfer of a computer program from one place to another. Storage media may be any available media that can be accessed by a general-purpose or special-purpose computer.

The above description is only optional embodiments of this application and is not intended to limit this application. Any modification, equivalent replacement, improvement, etc., made within the spirit and principles of this application shall be included within the protection scope of this application.

The implementations or embodiments of this application are not exhaustive and are only schematic illustrations of some implementations or embodiments, and do not constitute specific limitations on the protection scope of this application. In the absence of contradiction, each step in an implementation or embodiment may be implemented as an independent embodiment, and the steps may be combined arbitrarily. For example, a solution obtained by removing some steps from an implementation or embodiment may also be implemented as an independent embodiment, and the order of the steps in an implementation or embodiment may be arbitrarily swapped. In addition, optional methods or examples in an implementation or embodiment may be arbitrarily combined. Furthermore, the implementations or embodiments may be arbitrarily combined. For example, part or all of the steps of different implementations or embodiments may be arbitrarily combined, and an implementation or embodiment may be arbitrarily combined with optional methods or examples of other implementations or embodiments.

In some implementations or embodiments, "in response to...", "in the case of...", " when...", "in a case that...", "if...", "in a case where...", etc. in this application may be replaced with each other.

In some implementations or embodiments, expressions such as "A or B", "A and/or B", "at least one of A and B", "in one case A, in another case B", "in response to one case A, in response to another case B", etc. in this application may, depending on the situation, include at least one of the following technical solutions: performing A regardless of B, i.e., A in some implementations or embodiments; performing B regardless of A, i.e., B in some implementations or embodiments; selectively performing A or B, i.e., selecting from A and B in some implementations or embodiments; performing both A and B, i.e., A and B in some implementations or embodiments.

In some implementations or embodiments, "includes A", "contains A", "used to indicate A", carries A" in this application may be interpreted as directly carrying A, or indirectly indicating A.

Furthermore, each element, each row, or each column in the tables involved in this application may be implemented as an independent embodiment, and any combination of elements, rows, or columns may also be implemented as an independent embodiment.

## Claims

1. A method for determining an applicable cell, performed by a terminal, comprising:
receiving configuration information, wherein the configuration information is used for a condition-triggered mobility management; and
determining an applicable cell corresponding to an execution condition of the condition-triggered mobility management.

2. The method according to claim 1, wherein the condition-triggered mobility management comprises:
a condition-triggered mobility management for master cell group (MCG); and/or
a condition-triggered mobility management for secondary cell group (SCG).

3. The method according to claim 1 or 2, wherein the configuration information comprises the execution condition, and determining the applicable cell corresponding to the execution condition of the condition-triggered mobility management comprises:
determining the applicable cell corresponding to the execution condition based on a type of the execution condition.

4. The method according to claim 3, wherein the type of the execution condition comprises a first execution condition and/or a second execution condition;
the first execution condition comprises an execution condition of the condition-triggered mobility management for MCG, and the second execution condition comprises an execution condition of the condition-triggered mobility management for SCG.

5. The method according to claim 4, wherein the configuration information further comprises a candidate configuration, and determining the applicable cell corresponding to the execution condition based on the type of the execution condition comprises:
in a case where the type of the execution condition comprises the first execution condition, determining a first candidate cell corresponding to the candidate configuration as the applicable cell corresponding to the first execution condition; and/or
in a case where the type of the execution condition comprises the second execution condition, determining a second candidate cell corresponding to the candidate configuration as the applicable cell corresponding to the second execution condition.

6. The method according to claim 5, wherein the first execution condition corresponds to at least one first measurement identifier, and the second execution condition corresponds to at least one second measurement identifier;
determining the first candidate cell corresponding to the candidate configuration as the applicable cell corresponding to the first execution condition comprises: determining the first candidate cell corresponding to the candidate configuration as the applicable cell corresponding to the at least one first measurement identifier;
determining the second candidate cell corresponding to the candidate configuration as the applicable cell corresponding to the second execution condition comprises: determining the second candidate cell corresponding to the candidate configuration as the applicable cell corresponding to the at least one second measurement identifier.

7. The method according to claim 1 or 2, wherein the configuration information comprises the execution condition, and determining the applicable cell corresponding to the execution condition of the condition-triggered mobility management comprises:
determining the applicable cell corresponding to the execution condition based on indication information of the execution condition.

8. The method according to claim 7, wherein the execution condition comprises third execution conditions, and the third execution conditions comprise an execution condition of the condition-triggered mobility management for MCG and an execution condition of the condition-triggered mobility management for SCG.

9. The method according to claim 8, wherein indication information of the third execution conditions or indication information of at least one entry in the third execution condition comprises at least one of:
at least one third measurement identifier;
a cell identifier associated with a third measurement identifier;
a cell type associated with a third measurement identifier; or
an operation associated with a third measurement identifier.

10. The method according to claim 9, wherein the configuration information further comprises a candidate configuration, and the candidate configuration corresponds to a first candidate cell and/or a second candidate cell;
the indication information of the execution condition comprises the cell type associated with the third measurement identifier;
determining the applicable cell corresponding to the execution condition based on the indication information of the execution condition comprises at least one of:
in a case where the cell type associated with the third measurement identifier comprises the first candidate cell, determining the first candidate cell as the applicable cell corresponding to the third execution condition and/or the third measurement identifier;
in a case where the cell type associated with the third measurement identifier comprises the second candidate cell, determining the second candidate cell as the applicable cell corresponding to the third execution condition and/or the third measurement identifier.

11. The method according to claim 9, wherein the configuration information further comprises a candidate configuration, and the candidate configuration corresponds to a first candidate cell and/or a second candidate cell;
the indication information of the execution condition comprises the operation associated with the third measurement identifier;
determining the applicable cell corresponding to the execution condition based on the indication information of the execution condition comprises at least one of:
in a case where the operation associated with the third measurement identifier comprises triggering the condition-triggered mobility management for MCG, determining the first candidate cell as the applicable cell corresponding to the third execution condition and/or the third measurement identifier;
in a case where the operation associated with the third measurement identifier comprises triggering the condition-triggered mobility management for SCG, determining the second candidate cell as the applicable cell corresponding to the third execution condition and/or the third measurement identifier.

12. The method according to claim 7, wherein the execution condition comprises at least one fourth execution condition, and the at least one fourth execution condition comprises an execution condition of the condition-triggered mobility management for MCG and/or an execution condition of the condition-triggered mobility management for SCG.

13. The method according to claim 12, wherein indication information of the at least one fourth execution condition comprises at least one of:
a cell identifier associated with the at least one fourth execution condition;
a cell type associated with the at least one fourth execution condition; or
an operation associated with the at least one fourth execution condition.

14. The method according to claim 13, wherein the configuration information further comprises a candidate configuration, and the candidate configuration corresponds to a first candidate cell and/or a second candidate cell;
the indication information of the execution condition comprises the cell type associated with the at least one fourth execution condition;
determining the applicable cell corresponding to the execution condition based on the indication information of the execution condition comprises at least one of:
in a case where the cell type associated with the fourth execution condition comprises the first candidate cell, determining the first candidate cell as the applicable cell corresponding to the at least one fourth execution condition; or
in a case where the cell type associated with the fourth execution condition comprises the second candidate cell, determining the second candidate cell as the applicable cell corresponding to the at least one fourth execution condition.

15. The method according to claim 13, wherein the configuration information further comprises a candidate configuration, and the candidate configuration corresponds to a first candidate cell and/or a second candidate cell;
the indication information of the execution condition comprises the operation associated with the at least one fourth execution condition;
determining the applicable cell corresponding to the execution condition based on the indication information of the execution condition comprises at least one of:
in a case where the operation associated with the at least one fourth execution condition comprises triggering the condition-triggered mobility management for MCG, determining the first candidate cell as the applicable cell corresponding to the at least one fourth execution condition;
in a case where the operation associated with the at least one fourth execution condition comprises triggering the condition-triggered mobility management for SCG, determining the second candidate cell as the applicable cell corresponding to the at least one fourth execution condition.

16. The method according to any one of claims 1 to 15, wherein the configuration information comprises a candidate configuration;
determining the applicable cell corresponding to the execution condition of the condition-triggered mobility management comprises:
determining the applicable cell corresponding to the execution condition based on indication information of the candidate configuration.

17. The method according to claim 16, wherein the candidate configuration comprises a candidate MCG configuration and/or a candidate SCG configuration;
the indication information of the candidate configuration comprises at least one of:
an execution condition indicated by the candidate MCG configuration;
an execution condition indicated by the candidate SCG configuration;
a measurement identifier indicated by the candidate MCG configuration; or
a measurement identifier indicated by the candidate SCG configuration.

18. The method according to claim 17, wherein determining the applicable cell corresponding to the execution condition of the condition-triggered mobility management comprises at least one of:
determining the applicable cell corresponding to the execution condition indicated by the candidate MCG configuration as a first candidate cell;
determining the applicable cell corresponding to the measurement identifier indicated by the candidate MCG configuration as a first candidate cell;
determining the applicable cell corresponding to the execution condition indicated by the candidate SCG configuration as a second candidate cell; or
determining the applicable cell corresponding to the measurement identifier indicated by the candidate SCG configuration as a second candidate cell.

19. The method according to claim 1 or 2, wherein determining the applicable cell corresponding to the execution condition of the condition-triggered mobility management comprises:
determining the applicable cell corresponding to the execution condition based on the configuration information; or
determining the applicable cell corresponding to the execution condition based on a configuration manner of the configuration information; or
determining the applicable cell corresponding to the execution condition based on an associated event corresponding to the execution condition in the configuration information.

20. The method according to claim 19, wherein the configuration information further comprises a candidate configuration;
determining the applicable cell corresponding to the execution condition based on the configuration information comprises:
in a case where the configuration information comprises a fifth execution condition, determining the applicable cell corresponding to the fifth execution condition and/or the applicable cell corresponding to a measurement identifier corresponding to the fifth execution condition as a second candidate cell corresponding to the candidate configuration;
wherein the fifth execution condition is used for a condition-triggered mobility management for SCG.

21. The method according to claim 19, wherein the configuration information further comprises a candidate configuration;
determining the applicable cell corresponding to the execution condition based on the configuration manner of the configuration information comprises:
in a case where the configuration information comprises a sixth execution condition and the configuration manner of the configuration information is a first configuration manner, determining the applicable cell corresponding to the sixth execution condition and/or the applicable cell corresponding to a measurement identifier corresponding to the sixth execution condition as a second candidate cell corresponding to the candidate configuration;
wherein the sixth execution condition is used for a condition-triggered mobility management of the MCG and/or condition-triggered mobility management for SCG.

22. The method according to claim 21, wherein the first configuration manner comprises: being configured by a secondary node (SN) and sent to the terminal by the SN, or being configured by an SN and sent to the terminal by a master node (MN).

23. The method according to claim 19, wherein the configuration information further comprises a candidate configuration;
determining the applicable cell corresponding to the execution condition based on the associated event corresponding to the execution condition in the configuration information comprises:
in a case where the associated event corresponding to the execution condition in the configuration information comprises a first trigger event, determining the applicable cell corresponding to a sixth execution condition and/or the applicable cell corresponding to a measurement identifier corresponding to the sixth execution condition as a first candidate cell corresponding to the candidate configuration;
in a case where the associated event corresponding to the execution condition in the configuration information comprises a second trigger event, determining the applicable cell corresponding to the sixth execution condition and/or the applicable cell corresponding to a measurement identifier corresponding to the sixth execution condition as a second candidate cell corresponding to the candidate configuration.

24. The method according to claim 23, wherein the first trigger event comprises an event of triggering a condition-triggered mobility management for MCG and/or the second trigger event comprises an event of triggering a condition-triggered mobility management for SCG.

25. The method according to claim 23 or 24, wherein the first trigger event comprises at least one of a conditional event A3 or a conditional event A5, and the second trigger event comprises a conditional event A4.

26. The method according to claim 5, 6, 10, 11, 14, 15, 16, 17, 20, 21 or 23, wherein
in a case where the candidate configuration comprises the candidate MCG configuration, the first candidate cell comprises a candidate primary cell (PCell) corresponding to the candidate MCG configuration; and/or
in a case where the candidate configuration comprises the candidate SCG configuration, the second candidate cell comprises a candidate primary secondary cell (PSCell) corresponding to the candidate SCG configuration.

27. The method according to claim 26, wherein
the first candidate cell is determined based on a physical cell identity (PCI) and/or a cell index indicated by serving cell configuration information in synchronization reconfiguration information comprised in the candidate MCG configuration;
the second candidate cell is determined based on a PCI and/or a cell index indicated by serving cell configuration information in synchronization reconfiguration information comprised in the candidate SCG configuration.

28. The method according to claim 4, 8, 11, 12, 15, 20, 21, or 24, wherein
the execution condition of the condition-triggered mobility management for MCG comprises an execution condition for conditional handover (CHO);
the execution condition of condition-triggered mobility management for SCG comprises an execution condition for conditional primary secondary cell addition/change (CPAC).

29. The method according to any one of claims 1 to 28, wherein an evaluation of the execution condition is performed based on the applicable cell corresponding to the execution condition.

30. The method according to claim 29, wherein the evaluation of the execution condition is performed based on a measurement result of the applicable cell, and the evaluation of the execution condition comprises an evaluation of an associated event of the execution condition and/or an evaluation of an associated event of a measurement identifier corresponding to the execution condition.

31. The method according to claim 30, wherein the evaluation of the associated event comprises an evaluation of an entry condition of the associated event and/or an evaluation of a leaving condition of the associated event.

32. The method according to claim 30 or 31, wherein the measurement result comprises at least one of a Layer 3 measurement result, a Layer 2 measurement result or a Layer 1 measurement result.

33. A method for determining an applicable cell, performed by a network device, comprising:
sending configuration information, wherein the configuration information is used for a condition-triggered mobility management, and the configuration information is used for a terminal to determine an applicable cell corresponding to an execution condition of the condition-triggered mobility management.

34. The method according to claim 33, wherein the condition-triggered mobility management comprises at least one of:
a condition-triggered mobility management for MCG; or
a condition-triggered mobility management for SCG.

35. The method according to claim 33 or 34, wherein the configuration information comprises the execution condition and/or a candidate configuration;
the configuration information is used for the terminal to determine the applicable cell corresponding to the execution condition based on a type of the execution condition; or
the configuration information is used for the terminal to determine the applicable cell corresponding to the execution condition based on indication information of the execution condition; or
the configuration information is used for the terminal to determine the applicable cell corresponding to the execution condition based on indication information of the candidate configuration.

36. The method according to claim 35, wherein the execution condition comprises a first execution condition and/or a second execution condition;
the first execution condition comprises an execution condition of the condition-triggered mobility management for MCG, and the second execution condition comprises an execution condition of the condition-triggered mobility management for SCG.

37. The method according to claim 35, wherein the execution condition comprises third execution conditions, and the third execution conditions comprise an execution condition of the condition-triggered mobility management for MCG and an execution condition of the condition-triggered mobility management for SCG.

38. The method according to claim 35, wherein the execution condition comprises at least one fourth execution condition, and the at least one fourth execution condition comprises an execution condition of the condition-triggered mobility management for MCG and/or an execution condition of the condition-triggered mobility management for SCG.

39. The method according to claim 35, wherein the candidate configuration comprises a candidate MCG configuration and/or a candidate SCG configuration;
the indication information of the candidate configuration comprises at least one of:
an execution condition indicated by the candidate MCG configuration;
an execution condition indicated by the candidate SCG configuration;
a measurement identifier indicated by the candidate MCG configuration; or
a measurement identifier indicated by the candidate SCG configuration.

40. The method according to claim 33 or 34, wherein the configuration information is used for the terminal to determine the applicable cell corresponding to the execution condition based on the configuration information; or
the configuration information is used for the terminal to determine the applicable cell corresponding to the execution condition based on a configuration manner of the configuration information; or
the configuration information is used for the terminal to determine the applicable cell corresponding to the execution condition based on an associated event corresponding to the execution condition in the configuration information.

41. The method according to claim 34, 36, 37 or 38, wherein
the execution condition of the condition-triggered mobility management for MCG comprises an execution condition for CHO;
the execution condition of the condition-triggered mobility management for SCG comprises an execution condition for CPAC.

42. An apparatus for determining an applicable cell, comprising:
a first receiving module configured to receive configuration information, wherein the configuration information is used for a condition-triggered mobility management; and
a first determination module configured to determine an applicable cell corresponding to an execution condition of the condition-triggered mobility management.

43. An apparatus for determining an applicable cell, comprising:
a second sending module configured to send configuration information, wherein the configuration information is used for a condition-triggered mobility management, and the configuration information is used for a terminal to determine an applicable cell corresponding to an execution condition of the condition-triggered mobility management.

44. A communication device, comprising:
a processor;
a transceiver connected to the processor;
a memory configured to store executable instructions of the processor;
wherein the processor is configured to load and execute the executable instructions to cause the communication device to perform the method for determining an applicable cell according to any one of claims 1 to 32 or any one of claims 33 to 41.

45. A computer-readable storage medium having stored therein executable instructions that, when loaded and executed by a processor, causes the computer-readable storage medium to implement the method for determining an applicable cell according to any one of claims 1 to 32 or any one of claims 33 to 41.
